(19) Europäisches Patentamt
European Patent Office
Office européen des brevets

(11) EP 3 143 560 B1

(12) EUROPEAN PATENT SPECIFICATION

(45) Date of publication and mention of the grant of the patent:
**20.03.2024 Bulletin 2024/12**

(21) Application number: **15720525.3**

(22) Date of filing: **20.04.2015**

(51) International Patent Classification (IPC):
***G06N 3/02*** *(2006.01)* ***G06N 99/00*** *(2019.01)*

(52) Cooperative Patent Classification (CPC):
**G06N 3/049; G06N 3/045**

(86) International application number:
**PCT/US2015/026616**

(87) International publication number:
**WO 2015/175154 (19.11.2015 Gazette 2015/46)**

# (54) UPDATE OF CLASSIFIER OVER COMMON FEATURES

AKTUALISIERUNG VON KLASSIFIKATOR ÜBER GEMEINSAME FUNKTIONEN

MISE À JOUR DE CLASSIFIEUR ADAPTÉ À PARTIR DE CARACTÉRISTIQUES COMMUNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2014 US 201461992168 P**
**10.09.2014 US 201414483075**

(43) Date of publication of application:
**22.03.2017 Bulletin 2017/12**

(73) Proprietor: **Qualcomm Incorporated**
**San Diego, CA 92121-1714 (US)**

(72) Inventors:
- **WIERZYNSKI, Casimir Matthew**
**San Diego, California 92121-1714 (US)**
- **JULIAN, David Jonathan**
**San Diego, California 92121-1714 (US)**
- **SARAH, Anthony**
**San Diego, California 92121-1714 (US)**

(74) Representative: **Dunlop, Hugh Christopher et al**
**Maucher Jenkins**
**Seventh Floor Offices**
**Artillery House**
**11-19 Artillery Row**
**London SW1P 1RT (GB)**

(56) References cited:
**US-A1- 2012 259 801 US-A1- 2013 304 677**

- **EMILIANO MILUZZO ET AL: "Darwin phones: the evolution of sensing and inference on mobile phones", PROCEEDINGS OF THE 8TH INTERNATIONAL CONFERENCE ON MOBILE SYSTEMS, APPLICATIONS, AND SERVICES, MOBISYS '10, 15 June 2010 (2010-06-15), pages 5-20, XP055107959, New York, New York, USA DOI: 10.1145/1814433.1814437 ISBN: 978-1-60-558985-5**
- **Jeffrey Dean ET AL: "Large scale distributed deep networks", The 26th annual conference on Neural Information Processing Systems (NIPS'25): 3-8 December 2012, 6 December 2012 (2012-12-06), XP055113684, Retrieved from the Internet: URL:http://books.nips.cc/papers/files/nips 25/NIPS2012_0598.pdf [retrieved on 2014-04-11]**
- **LIXIN DUAN ET AL: "Domain Adaptation From Multiple Sources: A Domain-Dependent Regularization Approach", IEEE TRANSACTIONS ON NEURAL NETWORKS AND LEARNING SYSTEMS, IEEE, PISCATAWAY, NJ, USA, vol. 23, no. 3, 31 March 2012 (2012-03-31) , pages 504-518, XP011424893, ISSN: 2162-237X, DOI: 10.1109/TNNLS.2011.2178556**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 143 560 B1

## Description

## BACKGROUND

### Field

Certain aspects of the present disclosure generally relate to neural system engineering and, more particularly, to systems and methods for generating a customized classifier over a set of common features.

### Background

An artificial neural network, which may comprise an interconnected group of artificial neurons (i.e., neuron models), is a computational device or represents a method to be performed by a computational device. Artificial neural networks may have corresponding structure and/or function in biological neural networks. However, artificial neural networks may provide innovative and useful computational techniques for certain applications in which traditional computational techniques are cumbersome, impractical, or inadequate. Because artificial neural networks can infer a function from observations, such networks are particularly useful in applications where the complexity of the task or data makes the design of the function by conventional techniques burdensome.

"Darwin phones: the evolution of sensing and inference on mobile phones" by Emiliano Miluzzo et al. (PROCEEDINGS OF THE 8TH INTERNATIONAL CONFERENCE ON MOBILE SYSTEMS, APPLICATIONS, AND SERVICES, MOBISYS 15 June 2010; ISBN: 978-1 -60-558985-5) relates to a software framework that can utilize computing clusters with thousands of machines to train large models and two associated algorithms for large-scale distributed training.

"Large scale distributed deep networks" by Jeffery Dean et al. (26th annual conference on Neural Information Processing Systems, 6 December 2012; http://books.nips.cc/papers/files/nips25/NIPS2012_0598.pdf) relates to distributed machine learning techniques and collaborative inference concepts applied to mobile phones.

## SUMMARY

In one aspect of the present disclosure, a method of updating a set of classifiers is as set out in claim 1.

In another aspect of the present disclosure, an apparatus for updating a set of classifiers is as set out in claim 9.

In another aspect of the present disclosure, a computer program product for updating a set of classifiers is as set out in claim 10.

Additional features and advantages of the disclosure will be described below. It should be appreciated by those skilled in the art that this disclosure may be readily utilized as a basis for modifying or designing other structures for carrying out the same purposes of the present disclosure. It should also be realized by those skilled in the art that such equivalent constructions do not depart from the teachings of the disclosure as set forth in the appended claims. The novel features, which are believed to be characteristic of the disclosure, both as to its organization and method of operation, together with further objects and advantages, will be better understood from the following description when considered in connection with the accompanying figures. It is to be expressly understood, however, that each of the figures is provided for the purpose of illustration and description only and is not intended as a definition of the limits of the present disclosure.

## BRIEF DESCRIPTION OF THE DRAWINGS

The features, nature, and advantages of the present disclosure will become more apparent from the detailed description set forth below when taken in conjunction with the drawings in which like reference characters identify correspondingly throughout.

FIGURE 1 illustrates an example network of neurons in accordance with certain aspects of the present disclosure.

FIGURE 2 illustrates an example of a processing unit (neuron) of a computational network (neural system or neural network) in accordance with certain aspects of the present disclosure.

FIGURE 3 illustrates an example of spike-timing dependent plasticity (STDP) curve in accordance with certain aspects of the present disclosure.

FIGURE 4 illustrates an example of a positive regime and a negative regime for defining behavior of a neuron model in accordance with certain aspects of the present disclosure.

FIGURE 5 illustrates an example implementation of designing a neural network using a general-purpose processor in accordance with certain aspects of the present disclosure.

FIGURE 6 illustrates an example implementation of designing a neural network where a memory may be interfaced with individual distributed processing units in accordance with certain aspects of the present disclosure.

FIGURE 7 illustrates an example implementation of designing a neural network based on distributed memories and distributed processing units in accordance with certain aspects of the present disclosure.

FIGURE 8 illustrates an example implementation of a neural network in accordance with certain aspects of the present disclosure.

FIGURE 9 is a block diagram illustrating an exemplary data flow for learning a model in accordance with aspects of the present disclosure.

FIGURE 10 is a block diagram illustrating an exemplary architecture for a classifier in accordance with aspects of the present disclosure.

FIGURE 11 a block diagram illustrating an exemplary data flow for learning a model in accordance with aspects of the present disclosure.

FIGURE 12 is a flowchart illustrating an exemplary data flow for generating a classifier in accordance with aspects of the present disclosure.

FIGURE 13 illustrates a method for learning a model in accordance with aspects of the present disclosure.

FIGURE 14 illustrates a method for learning a model in accordance with aspects of the present disclosure.

FIGURE 15 illustrates a method for generating a classifier model in accordance with aspects of the present disclosure.

FIGURE 16 illustrates a method for generating a classifier model in accordance with aspects of the present disclosure.

FIGURE 17 illustrates a method for generating a classifier model in accordance with aspects of the present disclosure.

## DETAILED DESCRIPTION

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

Based on the teachings, one skilled in the art should appreciate that the scope of the disclosure is intended to cover any aspect of the disclosure, whether implemented independently of or combined with any other aspect of the disclosure. For example, an apparatus may be implemented or a method may be practiced using any number of the aspects set forth. In addition, the scope of the disclosure is intended to cover such an apparatus or method practiced using other structure, functionality, or structure and functionality in addition to or other than the various aspects of the disclosure set forth. It should be understood that any aspect of the disclosure disclosed may be embodied by one or more elements of a claim.

The word "exemplary" is used herein to mean "serving as an example, instance, or illustration." Any aspect described herein as "exemplary" is not necessarily to be construed as preferred or advantageous over other aspects.

Although particular aspects are described herein, many variations and permutations of these aspects fall within the scope of the disclosure. Although some benefits and advantages of the preferred aspects are mentioned, the scope of the disclosure is not intended to be limited to particular benefits, uses or objectives. Rather, aspects of the disclosure are intended to be broadly applicable to different technologies, system configurations, networks and protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

AN EXAMPLE NEURAL SYSTEM, TRAINING AND OPERATION

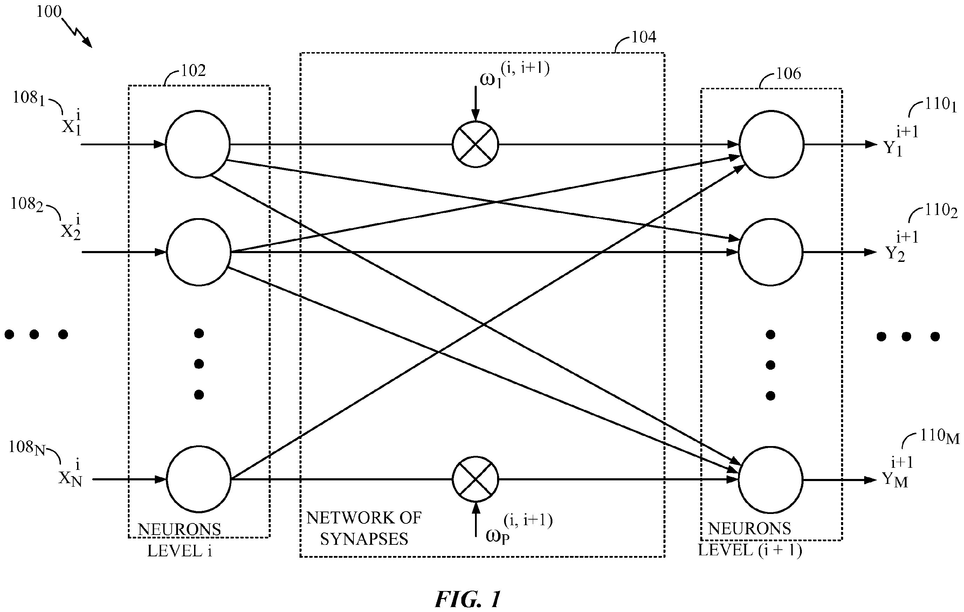

FIGURE 1 illustrates an example artificial neural system 100 with multiple levels of neurons in accordance with certain aspects of the present disclosure. The neural system 100 may have a level of neurons 102 connected to another level of neurons 106 through a network of synaptic connections 104 (i.e., feed-forward connections). For simplicity, only two levels of neurons are illustrated in FIGURE 1, although fewer or more levels of neurons may exist in a neural system. It should be noted that some of the neurons may connect to other neurons of the same layer through lateral connections. Furthermore, some of the neurons may connect back to a neuron of a previous layer through feedback connections.

As illustrated in FIGURE 1, each neuron in the level 102 may receive an input signal 108 that may be generated by neurons of a previous level (not shown in FIGURE 1). The signal 108 may represent an input current of the level 102 neuron. This current may be accumulated on the neuron membrane to charge a membrane potential. When the membrane potential reaches its threshold value, the neuron may fire and generate an output spike to be transferred to the next level of neurons (e.g., the level 106). In some modeling approaches, the neuron may continuously transfer a signal to the next level of neurons. This signal is typically a function of the membrane potential. Such behavior can be emulated or simulated in hardware and/or software, including analog and digital implementations such as those described below.

In biological neurons, the output spike generated when a neuron fires is referred to as an action potential. This electrical signal is a relatively rapid, transient, nerve impulse, having an amplitude of roughly 100 mV and a duration of about 1 ms. In a particular embodiment of a neural system having a series of connected neurons (e.g., the transfer of spikes from one level of neurons to another in FIGURE 1), every action potential has basically the same amplitude and duration, and thus, the information in the signal may be represented only by the frequency and number of spikes, or the time of spikes, rather than by the amplitude. The information carried by an action potential may be determined by the spike, the neuron that spiked, and the time of the spike relative to other spike or spikes. The importance of the spike may be determined by a weight applied to a connection between neurons, as explained below.

The transfer of spikes from one level of neurons to another may be achieved through the network of synaptic connections (or simply "synapses") 104, as illustrated in FIGURE 1. Relative to the synapses 104, neurons of level 102 may be considered presynaptic neurons and neurons of level 106 may be considered postsynaptic neurons. The synapses 104 may receive output signals (i.e., spikes) from the level 102 neurons and scale those signals according to adjustable synaptic weights $w_1^{(i,i+1)}, \ldots, w_P^{(i,i+1)}$ where P is a total number of synaptic connections between the neurons of levels 102 and 106 and i is an indicator of the neuron level. In the example of FIGURE 1, i represents neuron level 102 and i+1 represents neuron level 106. Further, the scaled signals may be combined as an input signal of each neuron in the level 106. Every neuron in the level 106 may generate output spikes 110 based on the corresponding combined input signal. The output spikes 110 may be transferred to another level of neurons using another network of synaptic connections (not shown in FIGURE 1).

Biological synapses can mediate either excitatory or inhibitory (hyperpolarizing) actions in postsynaptic neurons and can also serve to amplify neuronal signals. Excitatory signals depolarize the membrane potential (i.e., increase the membrane potential with respect to the resting potential). If enough excitatory signals are received within a certain time period to depolarize the membrane potential above a threshold, an action potential occurs in the postsynaptic neuron. In contrast, inhibitory signals generally hyperpolarize (i.e., lower) the membrane potential. Inhibitory signals, if strong enough, can counteract the sum of excitatory signals and prevent the membrane potential from reaching a threshold. In addition to counteracting synaptic excitation, synaptic inhibition can exert powerful control over spontaneously active neurons. A spontaneously active neuron refers to a neuron that spikes without further input, for example due to its dynamics or a feedback. By suppressing the spontaneous generation of action potentials in these neurons, synaptic inhibition can shape the pattern of firing in a neuron, which is generally referred to as sculpturing. The various synapses 104 may act as any combination of excitatory or inhibitory synapses, depending on the behavior desired.

The neural system 100 may be emulated by a general purpose processor, a digital signal processor (DSP), an application specific integrated circuit (ASIC), a field programmable gate array (FPGA) or other programmable logic device (PLD), discrete gate or transistor logic, discrete hardware components, a software module executed by a processor, or any combination thereof. The neural system 100 may be utilized in a large range of applications, such as image and pattern recognition, machine learning, motor control, and alike. Each neuron in the neural system 100 may be implemented as a neuron circuit. The neuron membrane charged to the threshold value initiating the output spike may be implemented, for example, as a capacitor that integrates an electrical current flowing through it.

In an aspect, the capacitor may be eliminated as the electrical current integrating device of the neuron circuit, and a smaller memristor element may be used in its place. This approach may be applied in neuron circuits, as well as in various other applications where bulky capacitors are utilized as electrical current integrators. In addition, each of the synapses 104 may be implemented based on a memristor element, where synaptic weight changes may relate to changes of the memristor resistance. With nanometer feature-sized memristors, the area of a neuron circuit and synapses may be substantially reduced, which may make implementation of a large-scale neural system hardware implementation more practical.

Functionality of a neural processor that emulates the neural system 100 may depend on weights of synaptic connections, which may control strengths of connections between neurons. The synaptic weights may be stored in a non-volatile memory in order to preserve functionality of the processor after being powered down. In an aspect, the synaptic weight memory may be implemented on a separate external chip from the main neural processor chip. The synaptic weight memory may be packaged separately from the neural processor chip as a replaceable memory card. This may provide diverse functionalities to the neural processor, where a particular functionality may be based on synaptic weights stored in a memory card currently attached to the neural processor.

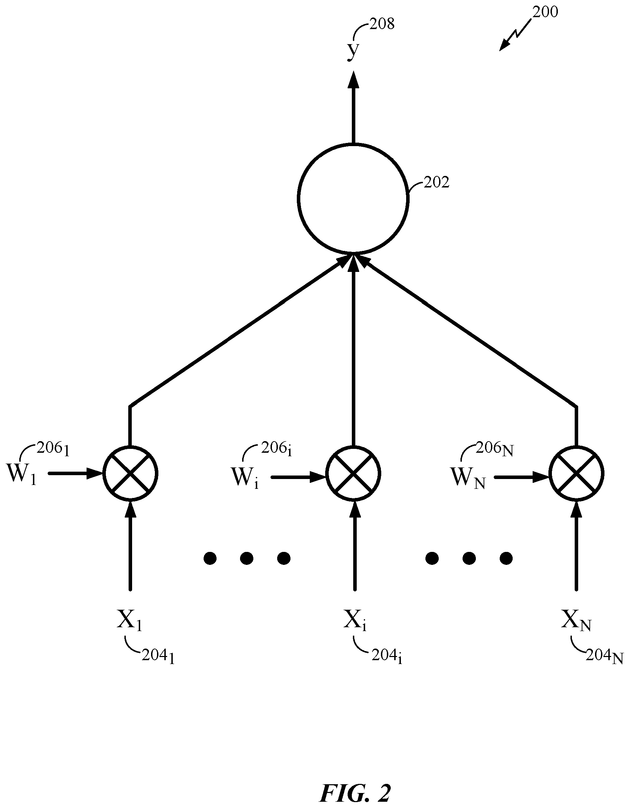

FIGURE 2 illustrates an exemplary diagram 200 of a processing unit (e.g., a neuron or neuron circuit) 202 of a computational network (e.g., a neural system or a neural network) in accordance with certain aspects of the present disclosure. For example, the neuron 202 may correspond to any of the neurons of levels 102 and 106 from FIGURE 1. The neuron 202 may receive multiple input signals $204_1$-$204_N$, which may be signals external to the neural system, or signals generated by other neurons of the same neural system, or both. The input signal may be a current, a conductance, a voltage, a real-valued, and/or a complex-valued. The input signal may comprise a numerical value with a fixed-point or a floating-point representation. These input signals may be delivered to the neuron 202 through synaptic connections that scale the signals according to adjustable synaptic weights $206_1$-$206_N$ ($W_1$-$W_N$), where N may be a total number of input connections of the neuron 202.

The neuron 202 may combine the scaled input signals and use the combined scaled inputs to generate an output signal 208 (i.e., a signal Y). The output signal 208 may be a current, a conductance, a voltage, a real-valued and/or a complex-valued. The output signal may be a numerical value with a fixed-point or a floating-point representation. The output signal 208 may be then transferred as an input signal to other neurons of the same neural system, or as an input signal to the same neuron 202, or as an output of the neural system.

The processing unit (neuron) 202 may be emulated by an electrical circuit, and its input and output connections may be emulated by electrical connections with synaptic circuits. The processing unit 202 and its input and output connections may also be emulated by a software code. The processing unit 202 may also be emulated by an electric circuit, whereas its input and output connections may be emulated by a software code. In an aspect, the processing unit 202 in the computational network may be an analog electrical circuit. In another aspect, the processing unit 202 may be a digital electrical circuit. In yet another aspect, the processing unit 202 may be a mixed-signal electrical circuit with both analog and digital components. The computational network may include processing units in any of the aforementioned forms. The computational network (neural system or neural network) using such processing units may be utilized in a large range of applications, such as image and pattern recognition, machine learning, motor control, and the like.

During the course of training a neural network, synaptic weights (e.g., the weights $w_1^{(i,i+1)}, \ldots, w_P^{(i,i+1)}$ from FIGURE 1 and/or the weights $206_1$-$206_N$ from FIGURE 2) may be initialized with random values and increased or decreased according to a learning rule. Those skilled in the art will appreciate that examples of the learning rule include, but are not limited to the spike-timing-dependent plasticity (STDP) learning rule, the Hebb rule, the Oja rule, the Bienenstock-Copper-Munro (BCM) rule, etc. In certain aspects, the weights may settle or converge to one of two values (i.e., a bimodal distribution of weights). This effect can be utilized to reduce the number of bits for each synaptic weight, increase the speed of reading and writing from/to a memory storing the synaptic weights, and to reduce power and/or processor consumption of the synaptic memory.

Synapse Type

In hardware and software models of neural networks, the processing of synapse related functions can be based on synaptic type. Synapse types may be non-plastic synapses (no changes of weight and delay), plastic synapses (weight may change), structural delay plastic synapses (weight and delay may change), fully plastic synapses (weight, delay and connectivity may change), and variations thereupon (e.g., delay may change, but no change in weight or connectivity). The advantage of multiple types is that processing can be subdivided. For example, non-plastic synapses may not use plasticity functions to be executed (or waiting for such functions to complete). Similarly, delay and weight plasticity may be subdivided into operations that may operate together or separately, in sequence or in parallel. Different types of synapses may have different lookup tables or formulas and parameters for each of the different plasticity types that apply. Thus, the methods would access the relevant tables, formulas, or parameters for the synapse's type.

There are further implications of the fact that spike-timing dependent structural plasticity may be executed independently of synaptic plasticity. Structural plasticity may be executed even if there is no change to weight magnitude (e.g., if the weight has reached a minimum or maximum value, or it is not changed due to some other reason) s structural plasticity (i.e., an amount of delay change) may be a direct function of pre-post spike time difference. Alternatively, structural plasticity may be set as a function of the weight change amount or based on conditions relating to bounds of the weights or weight changes. For example, a synapse delay may change only when a weight change occurs or if weights reach zero but not if they are at a maximum value. However, it may be advantageous to have independent functions so that these processes can be parallelized reducing the number and overlap of memory accesses.

DETERMINATION OF SYNAPTIC PLASTICITY

Neuroplasticity (or simply "plasticity") is the capacity of neurons and neural networks in the brain to change their synaptic connections and behavior in response to new information, sensory stimulation, development, damage, or dysfunction. Plasticity is important to learning and memory in biology, as well as for computational neuroscience and neural networks. Various forms of plasticity have been studied, such as synaptic plasticity (e.g., according to the Hebbian theory), spike-timing-dependent plasticity (STDP), non-synaptic plasticity, activity-dependent plasticity, structural plasticity and homeostatic plasticity.

STDP is a learning process that adjusts the strength of synaptic connections between neurons. The connection strengths are adjusted based on the relative timing of a particular neuron's output and received input spikes (i.e., action potentials). Under the STDP process, long-term potentiation (LTP) may occur if an input spike to a certain neuron tends, on average, to occur immediately before that neuron's output spike. Then, that particular input is made somewhat stronger. On the other hand, long-term depression (LTD) may occur if an input spike tends, on average, to occur immediately after an output spike. Then, that particular input is made somewhat weaker, and hence the name "spike-timing-dependent plasticity." Consequently, inputs that might be the cause of the postsynaptic neuron's excitation are made even more likely to contribute in the future, whereas inputs that are not the cause of the postsynaptic spike are made less likely to contribute in the future. The process continues until a subset of the initial set of connections remains, while the influence of all others is reduced to an insignificant level.

Because a neuron may produce an output spike when many of its inputs occur within a brief period (i.e., being cumulative sufficient to cause the output), the subset of inputs that typically remains includes those that tended to be correlated in time. In addition, because the inputs that occur before the output spike are strengthened, the inputs that provide the earliest sufficiently cumulative indication of correlation will eventually become the final input to the neuron.

The STDP learning rule may effectively adapt a synaptic weight of a synapse connecting a presynaptic neuron to a postsynaptic neuron as a function of time difference between spike time $t_{pre}$ of the presynaptic neuron and spike time $t_{post}$ of the postsynaptic neuron (i.e., $t = t_{post} - t_{pre}$). A typical formulation of the STDP is to increase the synaptic weight (i.e., potentiate the synapse) if the time difference is positive (the presynaptic neuron fires before the postsynaptic neuron), and decrease the synaptic weight (i.e., depress the synapse) if the time difference is negative (the postsynaptic neuron fires before the presynaptic neuron).

In the STDP process, a change of the synaptic weight over time may be typically achieved using an exponential decay, as given by:

$$\Delta w(t) = \begin{cases} a_{+}e^{-t/k_{+}} + \mu, t > 0 \\ a_{-}e^{t/k_{-}}, t < 0 \end{cases}, \qquad (1)$$

where $k_+$ and $k_-$ $\tau_{\text{sign}(\Delta t)}$ are time constants for positive and negative time difference, respectively, $a_+$ and $a_-$ are corresponding scaling magnitudes, and $\mu$ is an offset that may be applied to the positive time difference and/or the negative time difference.

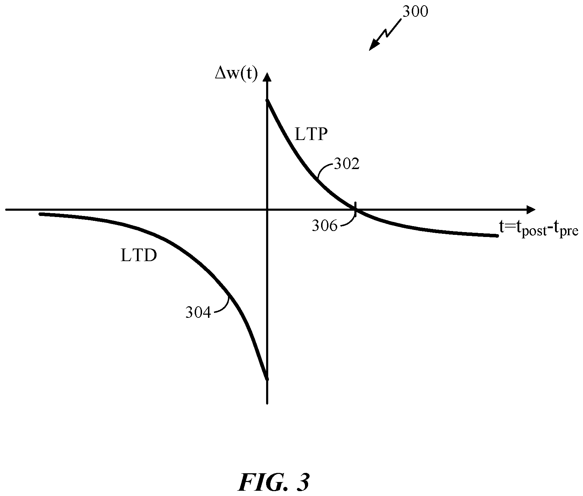

FIGURE 3 illustrates an exemplary diagram 300 of a synaptic weight change as a function of relative timing of presynaptic and postsynaptic spikes in accordance with the STDP. If a presynaptic neuron fires before a postsynaptic neuron, then a corresponding synaptic weight may be increased, as illustrated in a portion 302 of the graph 300. This weight increase can be referred to as an LTP of the synapse. It can be observed from the graph portion 302 that the amount of LTP may decrease roughly exponentially as a function of the difference between presynaptic and postsynaptic spike times. The reverse order of firing may reduce the synaptic weight, as illustrated in a portion 304 of the graph 300, causing an LTD of the synapse.

As illustrated in the graph 300 in FIGURE 3, a negative offset $\mu$ may be applied to the LTP (causal) portion 302 of the STDP graph. A point of cross-over 306 of the x-axis (y=0) may be configured to coincide with the maximum time lag for considering correlation for causal inputs from layer i-1. In the case of a frame-based input (i.e., an input that is in the form of a frame of a particular duration comprising spikes or pulses), the offset value $\mu$ can be computed to reflect the frame boundary. A first input spike (pulse) in the frame may be considered to decay over time either as modeled by a postsynaptic potential directly or in terms of the effect on neural state. If a second input spike (pulse) in the frame is considered correlated or relevant to a particular time frame, then the relevant times before and after the frame may be separated at that time frame boundary and treated differently in plasticity terms by offsetting one or more parts of the STDP curve such that the value in the relevant times may be different (e.g., negative for greater than one frame and positive for less than one frame). For example, the negative offset $\mu$ may be set to offset LTP such that the curve actually goes below zero at a pre-post time greater than the frame time and it is thus part of LTD instead of LTP.

NEURON MODELS AND OPERATION

There are some general principles for designing a useful spiking neuron model. A good neuron model may have rich potential behavior in terms of two computational regimes: coincidence detection and functional computation. Moreover, a good neuron model should have two elements to allow temporal coding: arrival time of inputs affects output time and coincidence detection can have a narrow time window. Finally, to be computationally attractive, a good neuron model may have a closed-form solution in continuous time and stable behavior including near attractors and saddle points. In other words, a useful neuron model is one that is practical and that can be used to model rich, realistic and biologically-consistent behaviors, as well as be used to both engineer and reverse engineer neural circuits.

A neuron model may depend on events, such as an input arrival, output spike or other event whether internal or external. To achieve a rich behavioral repertoire, a state machine that can exhibit complex behaviors may be desired. If the occurrence of an event itself, separate from the input contribution (if any), can influence the state machine and constrain dynamics subsequent to the event, then the future state of the system is not only a function of a state and input, but rather a function of a state, event, and input.

In an aspect, a neuron n may be modeled as a spiking leaky-integrate-and-fire neuron with a membrane voltage $v_n(t)$ governed by the following dynamics:

$$\frac{dv_n(t)}{dt} = \alpha v_n(t) + \beta \sum_m w_{m,n} y_m(t - \Delta t_{m,n}), \qquad (2)$$

where $\alpha$ and $\beta$ are parameters, $w_{m,n}$ is a synaptic weight for the synapse connecting a presynaptic neuron *m* to a postsynaptic neuron *n*, and $y_m(t)$ is the spiking output of the neuron *m* that may be delayed by dendritic or axonal delay according to $\Delta t_{m,n}$ until arrival at the neuron n's soma.

It should be noted that there is a delay from the time when sufficient input to a postsynaptic neuron is established until the time when the postsynaptic neuron actually fires. In a dynamic spiking neuron model, such as Izhikevich's simple model, a time delay may be incurred if there is a difference between a depolarization threshold $v_t$ and a peak spike *voltage* $v_{peak}$. For example, in the simple model, neuron soma dynamics can be governed by the pair of differential equations for voltage and recovery, i.e.:

$$\frac{dv}{dt} = \left(k(v - v_t)(v - v_r) - u + I\right)/C, \qquad (3)$$

$$\frac{du}{dt} = a\left(b(v - v_r) - u\right). \qquad (4)$$

where v is a membrane potential, *u* is a membrane recovery variable, *k* is a parameter that describes time scale of the membrane potential *v*, *a* is a parameter that describes time scale of the recovery variable *u*, *b* is a parameter that describes sensitivity of the recovery variable u to the sub-threshold fluctuations of the membrane potential *v*, $v_r$ is a membrane resting potential, I is a synaptic current, and C is a membrane's capacitance. In accordance with this model, the neuron is defined to spike when $v > v_{peak}$.

Hunzinger Cold Model

The Hunzinger Cold neuron model is a minimal dual-regime spiking linear dynamical model that can reproduce a rich variety of neural behaviors. The model's one- or two-dimensional linear dynamics can have two regimes, wherein the time constant (and coupling) can depend on the regime. In the sub-threshold regime, the time constant, negative by convention, represents leaky channel dynamics generally acting to return a cell to rest in a biologically-consistent linear fashion. The time constant in the supra-threshold regime, positive by convention, reflects anti-leaky channel dynamics generally driving a cell to spike while incurring latency in spike-generation.

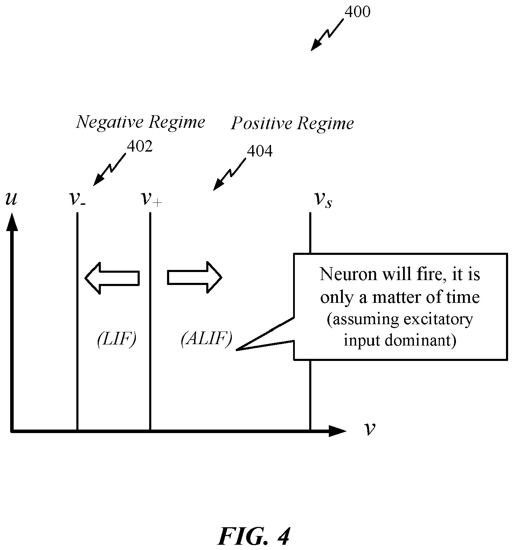

As illustrated in FIGURE 4, the dynamics of the model 400 may be divided into two (or more) regimes. These regimes may be called the negative regime 402 (also interchangeably referred to as the leaky-integrate-and-fire (LIF) regime, not to be confused with the LIF neuron model) and the positive regime 404 (also interchangeably referred to as the anti-leaky-integrate-and-fire (ALIF) regime, not to be confused with the ALIF neuron model). In the negative regime 402, the state tends toward rest (v_) at the time of a future event. In this negative regime, the model generally exhibits temporal input detection properties and other sub-threshold behavior. In the positive regime 404, the state tends toward a spiking event ($v_S$). In this positive regime, the model exhibits computational properties, such as incurring a latency to spike depending on subsequent input events. Formulation of dynamics in terms of events and separation of the dynamics into these two regimes are fundamental characteristics of the model.

Linear dual-regime bi-dimensional dynamics (for states $v$ and $u$ ) may be defined by convention as:

$$\tau_\rho \frac{dv}{dt} = v + q_\rho \qquad (5)$$

$$-\tau_u \frac{du}{dt} = u + r \qquad (6)$$

where $q_\rho$ and $r$ are the linear transformation variables for coupling.

The symbol $\rho$ is used herein to denote the dynamics regime with the convention to replace the symbol $\rho$ with the sign "-" or "+" for the negative and positive regimes, respectively, when discussing or expressing a relation for a specific regime.

The model state is defined by a membrane potential (voltage) v and recovery current u . In basic form, the regime is essentially determined by the model state. There are subtle, but important aspects of the precise and general definition, but for the moment, consider the model to be in the positive regime 404 if the voltage v is above a threshold ( $v_+$ ) and otherwise in the negative regime 402.

The regime-dependent time constants include $\tau_-$ which is the negative regime time constant, and $\tau_+$ which is the positive regime time constant. The recovery current time constant $\tau_u$ is typically independent of regime. For convenience, the negative regime time constant $\tau_-$ is typically specified as a negative quantity to reflect decay so that the same expression for voltage evolution may be used as for the positive regime in which the exponent and $\tau_+$ will generally be positive, as will be $\tau_u$.

The dynamics of the two state elements may be coupled at events by transformations offsetting the states from their null-clines, where the transformation variables are:

$$q_\rho = -\tau_\rho \beta u - v_\rho \qquad (7)$$

$$r = \delta(v + \varepsilon) \qquad (8)$$

where $\delta$, $\varepsilon$, $\beta$ and $v_-$, $v_+$ are parameters. The two values for $v_\rho$ are the base for reference voltages for the two regimes. The parameter $v_-$ is the base voltage for the negative regime, and the membrane potential will generally decay toward $v_-$ in the negative regime. The parameter $v_+$ is the base voltage for the positive regime, and the membrane potential will generally tend away from $v_+$ in the positive regime.

The null-clines for v and u are given by the negative of the transformation variables $q_\rho$ and $r$, respectively. The parameter $\delta$ is a scale factor controlling the slope of the u null-cline. The parameter $\varepsilon$ is typically set equal to - $v_-$. The parameter $\beta$ is a resistance value controlling the slope of the v null-clines in both regimes. The $\tau_\rho$ time-constant parameters control not only the exponential decays, but also the null-cline slopes in each regime separately.

The model may be defined to spike when the voltage v reaches a value $v_S$. Subsequently, the state may be reset at a reset event (which may be one and the same as the spike event):

$$v = \hat{v}_- \qquad (9)$$

$$u = u + \Delta u \qquad (10)$$

where $\hat{v}_-$ and $\Delta u$ are parameters. The reset voltage $\hat{v}_-$ is typically set to $v_-$.

By a principle of momentary coupling, a closed form solution is possible not only for state (and with a single exponential term), but also for the time to reach a particular state. The close form state solutions are:

$$v(t+\Delta t) = \left(v(t) + q_\rho\right)e^{\frac{\Delta t}{\tau_\rho}} - q_\rho \qquad (11)$$

$$u(t+\Delta t) = \left(u(t) + r\right)e^{-\frac{\Delta t}{\tau_u}} - r \qquad (12)$$

Therefore, the model state may be updated only upon events, such as an input (presynaptic spike) or output (postsynaptic spike). Operations may also be performed at any particular time (whether or not there is input or output).

Moreover, by the momentary coupling principle, the time of a postsynaptic spike may be anticipated so the time to reach a particular state may be determined in advance without iterative techniques or Numerical Methods (e.g., the Euler numerical method). Given a prior voltage state $v_0$, the time delay until voltage state $v_f$ is reached is given by:

$$\Delta t = \tau_\rho \log \frac{v_f + q_\rho}{v_0 + q_\rho} \qquad (13)$$

If a spike is defined as occurring at the time the voltage state $v$ reaches $v_S$, then the closed-form solution for the amount of time, or relative delay, until a spike occurs as measured from the time that the voltage is at a given state v is:

$$\Delta t_S = \begin{cases} \tau_+ \log \dfrac{v_S + q_+}{v + q_+} & if \quad v > \hat{v}_+ \\ \infty & otherwise \end{cases} \qquad (14)$$

where $\hat{v}_+$ is typically set to parameter $v_+$ , although other variations may be possible.

The above definitions of the model dynamics depend on whether the model is in the positive or negative regime. As mentioned, the coupling and the regime $\rho$ may be computed upon events. For purposes of state propagation, the regime and coupling (transformation) variables may be defined based on the state at the time of the last (prior) event. For purposes of subsequently anticipating spike output time, the regime and coupling variable may be defined based on the state at the time of the next (current) event.

There are several possible implementations of the Cold model, and executing the simulation, emulation or model in time. This includes, for example, event-update, step-event update, and step-update modes. An event update is an update where states are updated based on events or "event update" (at particular moments). A step update is an update when the model is updated at intervals (e.g., 1ms). This does not necessarily utilize iterative methods or Numerical methods. An event-based implementation is also possible at a limited time resolution in a step-based simulator by only updating the model if an event occurs at or between steps or by "step-event" update.

Although, the present disclosure has described various examples of spiking neurons, neuron models and networks, the present disclosure is not so limited. Rather, non-spiking neurons and networks may also be used to realize certain aspects of the present disclosure.

## DISTRIBUTED MODEL LEARNING AND CUSTOMIZED CLASSIFIER OVER COMMON FEATURES

Aspects of the present disclosure are directed to a process for continuing to learn a model in a distributed loosely coordinated way while devices also use the model. In one exemplary aspect, a deep neural network (DNN) may be used for object recognition in images on mobile devices in which the mobile devices send back information to the central server to continue to refine the model. For ease of explanation, the exemplary data flows and other descriptions are applied to images and object recognition. However, the present disclosure is not so limiting and instead any sensory modality may alternatively or additionally be utilized.

Further aspects of the present disclosure are directed to generating a classifier model. The classifier model may be customized over a common feature set. In one exemplary aspect, a central server may be configured to receive a corpora of labeled examples from one or more user devices. The user devices may comprise, personal computers (PCs), televisions, video game systems, mobile devices such as laptops, tablet PCs, smartphones, or other portable electronic devices.

The server may be configured with a set of statistical features that are relevant to a data set. In some aspects, the data set may, for example, correspond to a particular sensory modality (image, sound, orientation, location, etc.). The server may generate a classifier based on the received corpora of labeled examples and the set of statistical features.

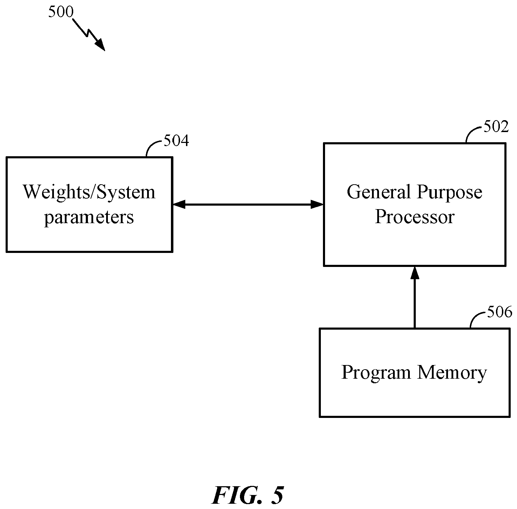

FIGURE 5 illustrates an example implementation 500 of the aforementioned learning a model, generating a classifier model, and/or updating a set of classifiers using a general-purpose processor 502 in accordance with certain aspects of the present disclosure. Variables (neural signals), synaptic weights, system parameters associated with a computational network (neural network), delays, frequency bin information parameter updates, outlier information, model updates, feature information, examples and/or label information may be stored in a memory block 504, while instructions executed at the general-purpose processor 502 may be loaded from a program memory 506. In an aspect of the present disclosure, the instructions loaded into the general-purpose processor 502 may comprise code for receiving model updates from one or more users, computing an updated model based on a previous model and the model updates, and/or transmitting data related to the updated model to the one or more users based on the updated model.

In another aspect of the present disclosure, the instructions loaded into the general-purpose processor 502 may comprise code for receiving data from a server based on a shared inference model, generating a model including one or more model parameters based on the received data, computing an inference based on the model, computing one or more model parameter updates based on the inference, and/or transmitting data based on the model parameter update(s) to the server.

In still another aspect of the present disclosure, the instructions loaded into the general-purpose processor 502 may comprise code for applying a first set of classifiers to a first set of data and/or requesting, from a remote device, a classifier update based on one or more of an output of the first set of classifiers or a performance measure of the application of the first set of classifiers.

In yet still another aspect of the present disclosure, the instructions loaded into the general-purpose processor 502 may comprise code for distributing a common feature model to multiple users, training multiple classifiers on top of the common feature model, and/or distributing a first classifier of the multiple classifiers to a first user of the multiple users and a second classifier of the multiple classifiers to a second user of the multiple of users.

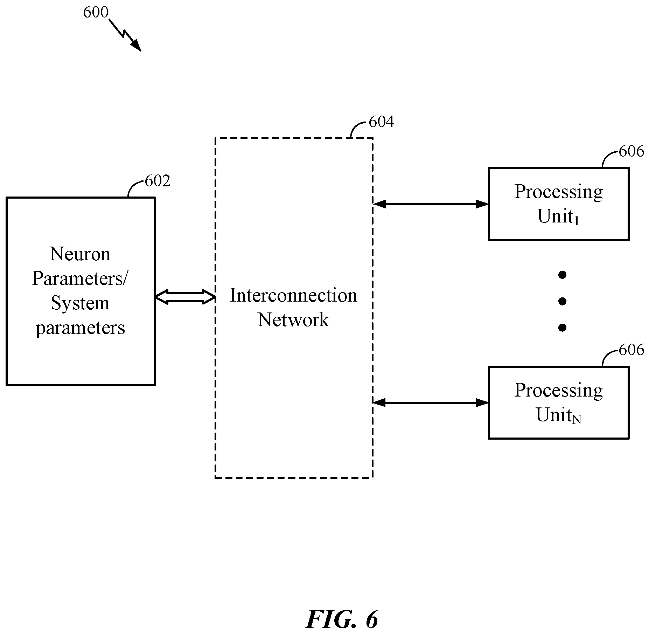

FIGURE 6 illustrates an example implementation 600 of the aforementioned learning a model and/or generating a classifier model where a memory 602 can be interfaced via an interconnection network 604 with individual (distributed) processing units (neural processors) 606 of a computational network (neural network) in accordance with certain aspects of the present disclosure. Variables (neural signals), synaptic weights, system parameters associated with the computational network (neural network) delays, frequency bin information parameter updates, outlier information, model updates, feature information, examples and/or label information may be stored in the memory 602, and may be loaded from the memory 602 via connection(s) of the interconnection network 604 into each processing unit (neural processor) 606. In an aspect of the present disclosure, the processing unit 606 may be configured to receive model updates from one or more users, compute an updated model based on a previous model and the model updates, and/or transmit data related to the updated model to the one or more users based on the updated model.

In another aspect of the present disclosure, the processing unit 606 may be configured to receive data from a server based on a shared inference model, generate a model including one or more model parameters based on the received data, compute an inference based on the model, compute one or more model parameter updates based on the inference, and/or transmit data based on the model parameter update(s) to the server.

In still another aspect of the present disclosure, the processing unit 606 may be configured to apply a first set of classifiers to a first set of data and/or request, from a remote device, a classifier update based on one or more of an output of the first set of classifiers or a performance measure of the application of the first set of classifiers.

In yet still another aspect of the present disclosure, the processing unit 606 may be configured to distribute a common feature model to multiple users, train multiple classifiers on top of the common feature model, and/or distribute a first classifier of the multiple classifiers to a first user of the multiple users and a second classifier of the multiple classifiers to a second user of the multiple of users.

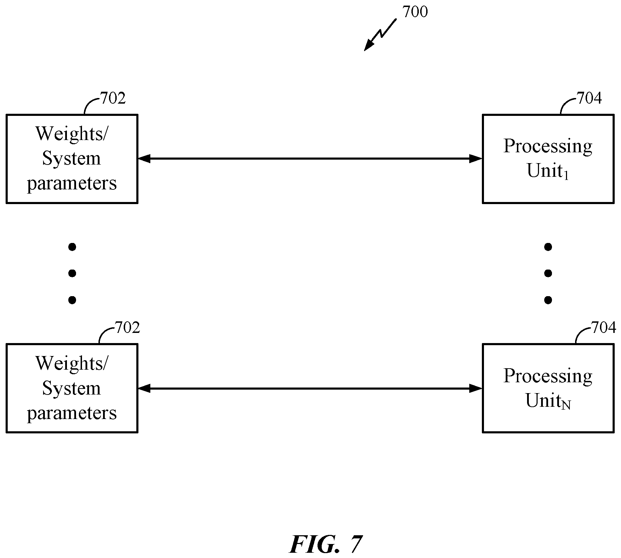

FIGURE 7 illustrates an example implementation 700 of the aforementioned learning a model and/or generating a classifier model. As illustrated in FIGURE 7, one memory bank 702 may be directly interfaced with one processing unit 704 of a computational network (neural network). Each memory bank 702 may store variables (neural signals), synaptic weights, and/or system parameters associated with a corresponding processing unit (neural processor) 704 delays, frequency bin information parameter updates, outlier information, model updates, feature information, examples and/or label information. In an aspect of the present disclosure, the processing unit 704 may be configured to receive model updates from one or more users, compute an updated model based on a previous model and the model updates, and/or transmit data related to the updated model to the one or more users based on the updated model.

In a further aspect of the present disclosure, the processing unit 704 may be configured to receive data from a server based on a shared inference model, generate a model including one or more model parameters based on the received data, compute an inference based on the model, compute one or more model parameter updates based on the inference, and/or transmit data based on the model parameter update(s) to the server.

In still another aspect of the present disclosure, the processing unit 704 may be configured to apply a first set of classifiers to a first set of data and/or request, from a remote device, a classifier update based on one or more of an output of the first set of classifiers or a performance measure of the application of the first set of classifiers.

In yet still another aspect of the present disclosure, the processing unit 704 may be configured to distribute a common feature model to multiple users, train multiple classifiers on top of the common feature model, and/or distribute a first classifier of the multiple classifiers to a first user of the multiple users and a second classifier of the multiple classifiers to a second user of the multiple of users.

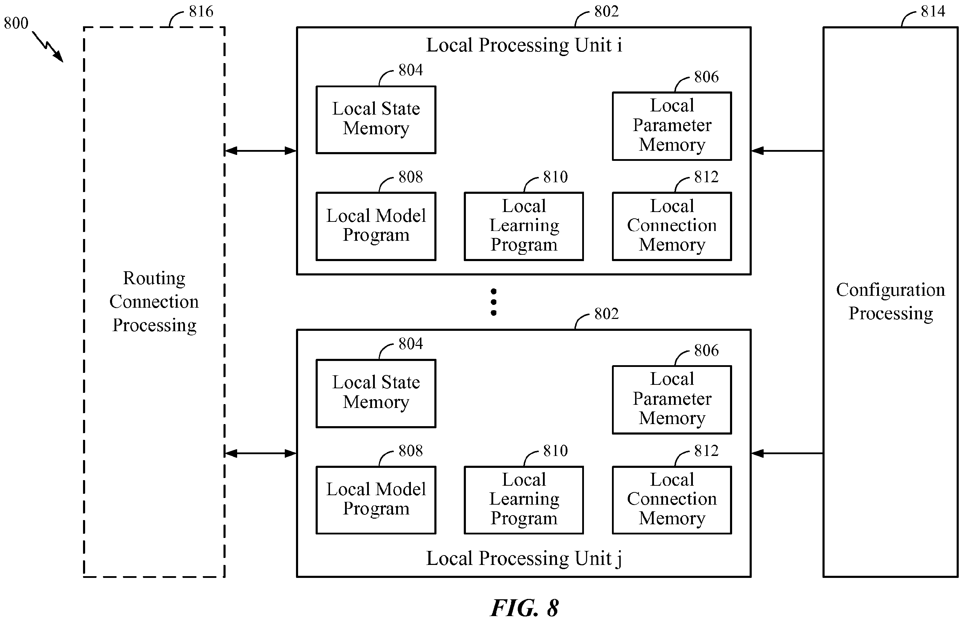

FIGURE 8 illustrates an example implementation of a neural network 800 in accordance with certain aspects of the present disclosure. As illustrated in FIGURE 8, the neural network 800 may have multiple local processing units 802 that may perform various operations of methods described herein. Each local processing unit 802 may comprise a local state memory 804 and a local parameter memory 806 that store parameters of the neural network. In addition, the local processing unit 802 may have a local (neuron) model program (LMP) memory 808 for storing a local model program, a local learning program (LLP) memory 810 for storing a local learning program, and a local connection memory 812. Furthermore, as illustrated in FIGURE 8, each local processing unit 802 may be interfaced with a configuration processor unit 814 for providing configurations for local memories of the local processing unit, and with a routing connection processing unit 816 that provide routing between the local processing units 802.

In one configuration, a neuron model is configured for receiving model updates from one or more users, computing an updated model based on a previous model and the model updates, and/or transmitting data related to the updated model to the one or more users based on the updated model. The neuron model includes a receiving means, computing means and transmitting means. In one aspect, the receiving means, computing means, and/or transmitting means may be the general-purpose processor 502, program memory 506, memory block 504, memory 602, interconnection network 604, processing units 606, processing unit 704, local processing units 802, and or the routing connection processing units 816 configured to perform the functions recited.

In another configuration, a neuron model is configured for receiving data from a server based on a shared inference model, computing an inference based on the model, computing one or more model parameter updates based on the inference, and/or transmitting data based on the model parameter update(s) to the server. The neuron model includes a receiving means, computing means and transmitting means. In one aspect, the receiving means, means for computing an inference, means for computing model parameter update(s) and/or transmitting means may be the general-purpose processor 502, program memory 506, memory block 504, memory 602, interconnection network 604, processing units 606, processing unit 704, local processing units 802, and or the routing connection processing units 816 configured to perform the functions recited.

In still another configuration, a neuron model is configured for applying a first set of classifiers to a first set of data and/or requesting, from a remote device, a classifier update based on one or more of an output of the first set of classifiers or a performance measure of the application of the first set of classifiers. The neuron model includes applying means and requesting means. In one aspect, the applying means and/or requesting means may be the general-purpose processor 502, program memory 506, memory block 504, memory 602, interconnection network 604, processing units 606, processing unit 704, local processing units 802, and or the routing connection processing units 816 configured to perform the functions recited.

In yet still another configuration, a neuron model is configured for distributing a common feature model to users, training classifiers on top of the common feature model, and/or distributing a first classifier of the classifiers to a first user and a second classifier to a second user. The neuron model includes means for distributing a common feature model, training means, and means for distributing a first classifier of the plurality of classifiers to a first user and a second classifier to a second user of the plurality of users ("means for distributing classifiers"). In one aspect, the means for distributing a common feature model, the training means and/or the means for distributing classifiers may be the general-purpose processor 502, program memory 506, memory block 504, memory 602, interconnection network 604, processing units 606, processing unit 704, local processing units 802, and/or the routing connection processing units 816 configured to perform the functions recited.

In a further configuration, a neuron model is configured for applying a set of common feature maps to a first corpora of labeled examples from a first designated user to learn a first classifier model, applying the set of common feature maps to a second corpora of labeled examples from a second designated user to learn a second classifier model, and/or distributing the classifier model. The neuron model includes means for applying a set of common feature maps to a first corpora of labeled examples from a first designated user to learn a first classifier model, means for applying a set of common feature maps to a second corpora of labeled examples from a second designated user to learn a second classifier model and distributing means. In one aspect, the means for applying a set of common feature maps to a first corpora of labeled examples from a first designated user to learn a first classifier model, means for applying a set of common feature maps to a second corpora of labeled examples from a second designated user to learn a second classifier model, and/or distributing means may be the general-purpose processor 502, program memory 506, memory block 504, memory 602, interconnection network 604, processing units 606, processing unit 704, local processing units 802, and or the routing connection processing units 816 configured to perform the functions recited.

In another configuration, the aforementioned means may be any module or any apparatus configured to perform the functions recited by the aforementioned means.

According to certain aspects of the present disclosure, each local processing unit 802 may be configured to determine parameters of the neural network based upon desired one or more functional features of the neural network, and develop the one or more functional features towards the desired functional features as the determined parameters are further adapted, tuned and updated.

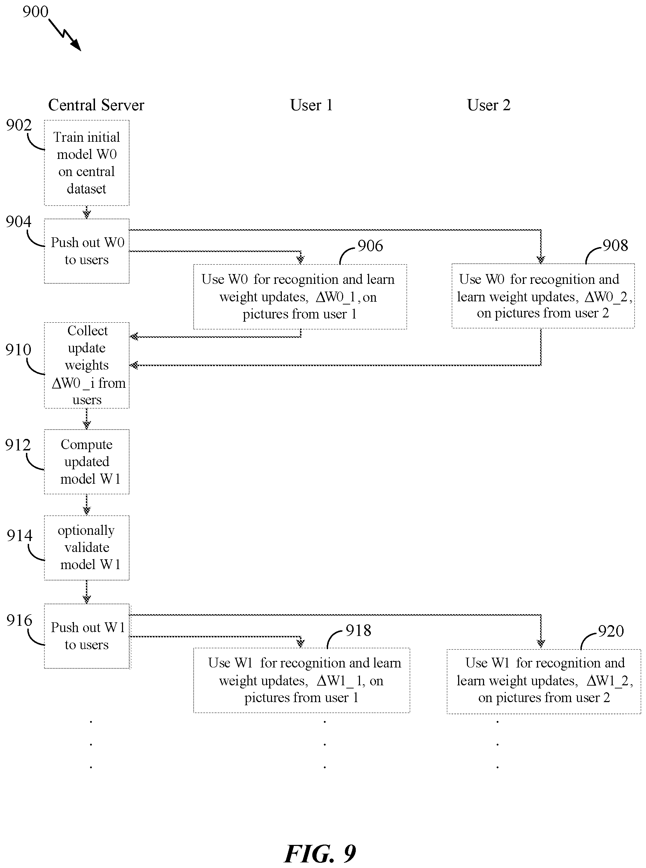

FIGURE 9 is a block diagram illustrating an exemplary data flow 900 for learning a model in accordance with aspects of the present disclosure. Referring to FIGURE 9, at block 902, a neural network may be trained to learn a model with initial weights W0. In some aspects, the neural network may be trained to learn a model for object recognition on a set of training images. The neural network, may for example, comprise a deep neural network (DNN). A DNN is a neural network with multiple hidden layers.

At block 904, the initial model weights (also referred to as "model"), W0, may be pushed out or distributed to users (e.g., mobile devices such as smartphones or other devices) or other entities. In some aspects, the model may be widely distributed (e.g., order of 100 million or billion devices).

At blocks 906 and 908, each mobile device uses the model W0 to perform a particular task. For example, in some aspects, the model W0 may provide classification of data on the mobile device. For instance, the model W0 may identify and/or label objects in pictures for the device users. In some aspects, the objects may be automatically identified or labeled using the model W0. Additionally, each mobile device may learn model parameter updates when a picture is taken, or in some cases when pictures are previewed, the mobile device i may also compute and accumulate model parameter updates ΔW0,i. In some aspects, the device i may only use the parameters (e.g., weights) of the distributed model W0 for inference, and may not apply its updates locally.

The parameter updates ΔW0,i may be computed in a number of ways. For example, the parameter updates ΔW0,i may be computed by prompting the user for a label and using back propagation or targeting one layer in the model for the period and computing weight gradients for that layer based on auto-encoder objective functions, for example. Of course, other types of objective functions may also be used. For instance, in some aspects, sparse auto-encoder, contractive auto-encoder, denoising auto-encoder objective functions and the like may also be used. Such objective functions may minimize reconstruction with regularization penalties. The parameter updates may also be computed using an unsupervised wake-sleep process or other update techniques.

The mobile devices (e.g., smartphones) send their model weight updates ΔW0,i for collection via a central server/hub , in block 910. In some aspects, the model weight updates may be sent to the central server on a periodic basis, such as daily, weekly, or monthly. Of course, this is merely exemplary and not limiting. For example, in some aspects, the mobile devices may send back updates in response to a request from the server (e.g., the server may poll for updates). In another example, the mobile devices may send the updates in response to server requests or in combination with periodic scheduled updates. In yet another example, the updates may be sent back based on an accumulation of training examples (e.g., taking a time of pictures since the last supplied update or a number of pictures since the last supplied update).

At block 912, the central server/hub computes a new model W1 based on the received model weight updates ΔW0,i from the mobile devices.

In some aspects, the new model may be validated via a validation process at block 914. At block 916, the new model W1 may be pushed out or distributed to the mobile device users. At blocks 918 and 920, each mobile device may use the model W1 to perform a particular task. Thereafter, the process may be repeated to further update the model.

Computing Model Updates

The updated model may be computed in various ways. For example, in some aspects, the updated model may be computed as follows:

$$W_{k+1} = W_k + \eta\left(\frac{1}{n}\sum_i \Delta W_{k,i}\right) \qquad (15)$$

where n is a number of user updates, and $\eta$ is a learning parameter.

In some aspects, the weight updates may be pre-normalized. For instance, the weight updates may be pre-normalized (divided) by a number of pictures learned on before sending back the weight updates. This may provide a straight average of the model weights.

In some aspects, the updates may also be weighted. In one example, the weight updates may be weighted as a function of $p_i$, the number of images used to compute ΔW0,i. As such, a weight update from a user that took hundreds of pictures may have a larger impact than a weight update from a user that only took one picture, for example. Accordingly, with this modification, the updated model may be computed as:

$$W_{k+1} = W_k + \eta\left(\sum_i p_i \Delta W_{k,i}\right) / \left(\sum_i p_i\right) \quad (16)$$

In the case of the weighted updates, it may be desirable to protect against overweighting by users. That is, it may be desirable to protect against, for example, users that take uninteresting pictures (e.g., numerous pictures of white walls), overrepresentation from individual users, and attackers trying to intentionally degrade the model. One approach would be to cap or limit the number of pictures $p_i$ to $1 \leq p_i \leq p_{\max}$ or equivalently, $p_i \leftarrow min(p_i, p_{\max})$, before running the weight updates. In this case, we may use an aggregate or large number of weight updates from multiple users (e.g., all users or a segment thereof such as peer group) to average out and protect against weight updates from attackers. Further, weight updates ΔWk,i that have large element values may be filtered out or normalized.

## Model Validation

Because the models pushed out or distributed to the users may support active inference in addition to learning new model updates, it may be useful to validate the updated model. For example, in some aspects, the model performance may be validated to ensure that the new learned weights do not overly degrade the inference performance. On the other hand, when inference performance is overly degraded, corrective action may be initiated.

The updated model performance is measured on a validation data set. In one example, an updated model performance may be measured by computing an accuracy or F-score for object recognition. In this example, the updated model may be distributed or pushed out only if the validation performance does not decrease by more than a predetermined amount (e.g., a defined percentage or a fixed difference). If the performance does decrease by more than the targeted amount, corrective measures may be implemented. For example, in some aspects, the model update may be disregarded for a period (e.g., for this round), a notification may be sent to a user (e.g., to reset their delta weights and/or use current model or a prior model).

In some aspects, an outlier detector, as described below, may identify a subset of users' weights to remove/ignore, for example. The updated model may then be recomputed based on the remaining weights. The updated model may also be subjected to retesting and validation processes. If the model still does not meet the target metrics, additional or more restrictive outlier filters may be used.

In some aspects, a line search in the gradient direction may be used. For example, this may be done by computing several potential updated models with different learning rates and using the model with the best validation performance, the model with the largest learning rate satisfying the target validation performance threshold, or a model selected as a function of the validation performance results.

The new or updated model may also include an indication to use a prior model for inference and the new model for computing weight updates. This may allow for learning to explore a number of steps in a direction that would decrease the model performance without affecting inference performance.

In other aspects, the user devices may maintain two models (e.g., W0 and W1). For instance, the user device may maintain one model (e.g., W0) and the deltas from the server corresponding to a model update (e.g., W1). Because the two models may be close in Euclidean distance, the devices may maintain the two models with less memory than used in storing two separate models. In this approach, after a number of steps, if the model performance improves to a new better performance point then the model is pushed out with an indication to use this new model. If model performance does not improve, one or more corrective action (e.g., the corrective actions describe above) may be employed.

In addition, a sanity check of the validation data set may be performed to ensure the validation data set is not getting old (e.g., missing new objects such as new phones, cars, etc., that are driving feature learning and update the validation dataset as appropriate).

## Outlier detection

In some configurations, an outlier detector filter may optionally be included to detect individual weight updates or users/devices with repeated weight updates that indicate issues or potential attacks. The outlier filter may test the weight updates against the population of weight updates. For example, the distribution of the updates for a given weight value may be computed. If a weight update is beyond a targeted number of standard deviations, it may be identified as an outlier.

Similarly, when a line search as referenced above is used, the gradient vector directions should be pointing toward the local minima. If the inner product of the user gradient and the population average gradient is below a threshold, it may be marked as an outlier. If the magnitude of the gradient or elements of the gradient are beyond a number of standard deviations of the population, it may also be marked as an outlier. Other statistical tests may be used. In addition, the population and distributions may be computed with or without the gradient under test as an outlier included.

If a given gradient update is noted as an outlier, it may be left out for the current round of weight updates or may be given a smaller weighting in the update. If a user is flagged as repeatedly providing outlier weight updates, the updates may be flagged for further investigation or the user may be flagged permanently as a user who may be intentionally or unintentionally attacking the model accuracy. In some aspects, flagged users may have their weight updates added in with less contribution than non-flagged users, For example, the updated model may be computed as:

$$W_{k+1} = W_k + \eta\left(\frac{1}{n_{non-flagged}} \sum_{i \in non-flagged} \Delta W_{k,i} + \frac{\gamma}{n_{flagged}} \sum_{i \in flagged} \Delta W_{k,i}\right) \quad (17)$$

where $\gamma < 1$ to provide smaller contribution for the flagged users. Alternatively the weights may be excluded from the updates, (e.g., $\gamma = 0$).

Conversely, the outlier detector may aid in determining updates based on more novel images and/or which contain more novel features. The outlier detector may also aid in identifying users that supply such novel images. Further, when novel images and/or users are identified, the outlier identifier may unweight those images, users and/or features.

Architecture Updates

The updated model may include architecture updates. Because the model may be utilized for inference tasks while the learning continues, it may be beneficial for the initial model capacity to be sized based on initial training data and device characteristics so that the training data is not overfitted. However, as the distributed learning progresses, the performance may become limited by the model capacity. At the same time, as the model learns, the lowest layers may start to converge to what they can learn (e.g., Gabor type edge detectors in a first layer). Additional training in those layers may have limited potential. To handle this, the model may grow and/or contract.

In one approach, the model performance during the compute and validate phases may be monitored to determine whether there is convergence for the current model capacity. Convergence metrics include tracking the model performance on a validation set to determine whether the performance has saturated for a targeted number of epochs, or to look at features of the weight updates, such as the magnitude of the weight update, the sparsity of the number of elements greater than a threshold, and/or the coherence of the gradient directions. The number of training epochs and/or training examples may also be used to determine if model growth and/or contraction would be beneficial.

If model growth is indicated, the number of neurons in one or more existing layers may be increased, or one or more additional layers may be added to the model, for example. The new neurons and/or levels may be added in one of several ways.

In one approach, the added architecture (e.g., neurons and/or layers) may be added so as to have no immediate impact. For example, the weights to new nodes in a layer may be configured with zero (0) values and/or the new layer may be configured with a set of weights that form an identity function. Then, subsequent learning epochs will start to learn the refined weights.

In another approach, new layers may be added in the approach described above, and then training may be implemented (supervised and/or unsupervised training) on a central data training set to get a better initial set of weights.

Although the approaches above allow growing the model, the same indications may be used to shrink the plastic/learnable portion of the model. For example, the bottom layer may be frozen so that weight updates are only computed and transmitted for higher layers.

Classifier-Feature Learner Split

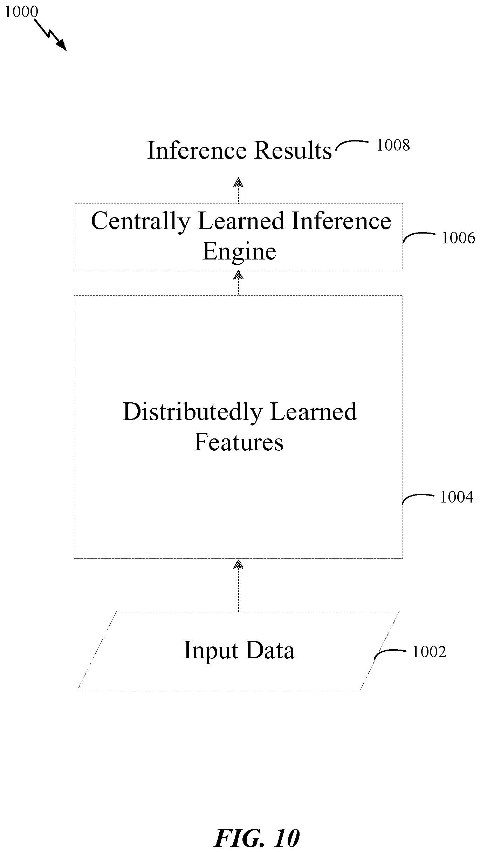

FIGURE 10 is a block diagram illustrating an exemplary architecture for a classifier 1000 in accordance with aspects of the present disclosure. One challenge in constructing a classifier is how to add or subtract class labels, or even build more sophisticated inference engines without starting the learning from scratch. One observation is that models such as deep neural networks can be viewed as learning features in the lower layers and inference engines on those features in the higher layers. Further, feature learning may benefit most from a large number of training examples, while the inference engine may learn with many fewer examples if it is using high quality features. Using this observation, distributed learning can learn model updates, such as weights, for the features and retrain the classifier from scratch each time in the top layers using a central data set as shown in FIGURE 10.

As an example, in the exemplary architecture 1000 for a classifier of FIGURE 10, the devices provide input data 1002 (e.g., may take pictures or provide other sensory input data). Model weight updates may be computed based on the input data 1002 to provide distributed learned features 1004 as feature layers of the DNN. The devices may then send the weight updates (periodically or otherwise) to a centrally learned inference engine 1006, and the feature model may be updated based on these weight updates, as previously described. Thereafter, the feature model weights may be fixed and a new image classifier may be trained on top of the features using a centrally labelled dataset 1008. The resulting model may then be distributed or pushed out to the devices for improved object recognition capability and further feature model learning.

As an extension of this, the centrally learned inference engine 1006 may add, subtract, combine object labels, extend to labeling multiple objects, or provide other improvements utilizing the continually learned features. Adding, subtracting, or combining object labels may be done by appropriately modifying the dataset used to learn the inference engine on top of the features, such as modifying labels for the existing images and/or adding/removing images.

Similarly, because the inference engine 1006 is built on top of the distributedly learned features 1004, a new inference process, architecture, or approach may be used. For example, a new inference process may include a labelling modification such as providing multiple labels for each image instead of a single label for each image. In another example, the inference engine architecture may be modified by switching from an artificial neural network (ANN) approach to a spiking neural network approach, Support Vector Machine (SVM) approach, or other approach.

Additionally, by learning the inference engine centrally, different inference engines may be learned for different use cases, devices, or applications by training different inference engines on the same set of features using different training data sets.

As yet another extension, instead of freezing the feature weights and only training the interference engine, the feature weights may also be further refined from learning on one or more training data sets to compute the resulting model that may be distributed to the users and/or devices. Conversely, the inference engine may be learned in the same distributed manner as the features.

In one configuration, the distributed learning may be largely unsupervised with occasional supervised input when users correct one or more model labels from the inference engine. In this configuration, more than one learning process may be used to compute model weight updates. Also, in this configuration, the distributed learning with the feature/inference learning conceptual split may locally update the inference engine using the users labels so that the user sees the model improvement faster.

Additionally, for privacy, opt-out, and/or bandwidth purposes, in some aspects, the user images may not be provided to the central server. In this case, an image may be cached in the user's device with a local label so that when a new model is received at the user device the inference engine may automatically be refined by updating the weights based on the locally stored images and labels. This may allow the user to have an inference engine that retains updates based on label corrections while the model continues to learn in a distributed manner.

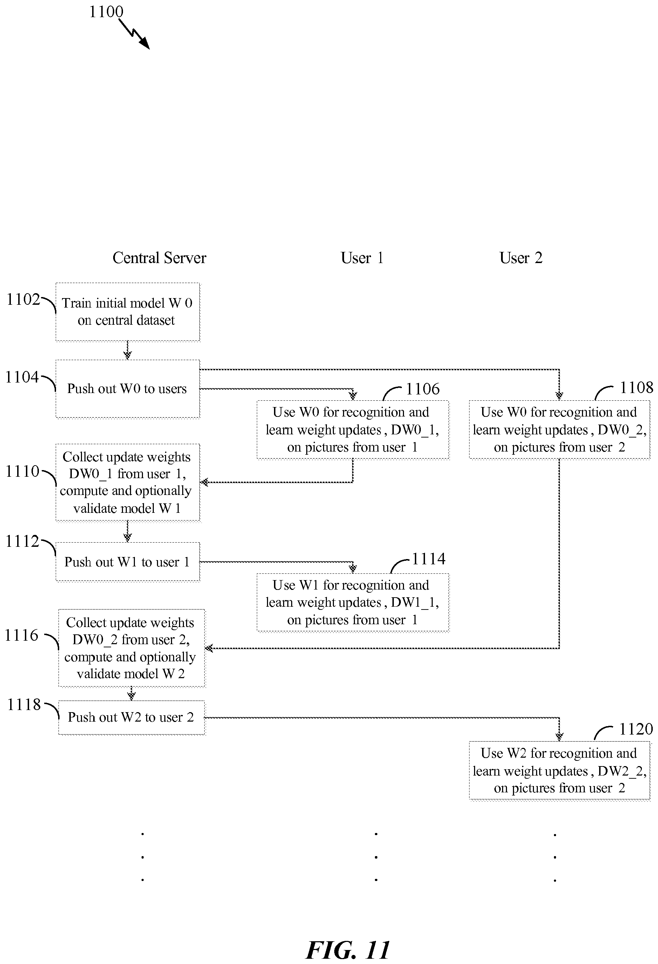

FIGURE 11is a block diagram illustrating an exemplary data flow 1100 for learning a model in accordance with aspects of the present disclosure. Referring to FIGURE 11, an initial model $W_0$ may be trained on a central data set at block 1102. At block 1104, the initial model $W_0$ may be pushed out or distributed, for example, to User 1 and User 2. Of course, this is merely exemplary, and the model may be distributed to any number of users, groups of users or other entities.

The initial model $W_0$ may be used for recognition and learning model at each user device (1106, 1108). However, the learned weight updates may be provided to the central server asynchronously. That is, each user may send weight updates to a central server asynchronously (1106 and 1108). When the central server receives a single model update (e.g., from User 1 at block 1110 or User 2 at block 1116), or maybe a set of model updates from a subset of users over a period of time, the server may compute a new model and distribute or push it out to the users (1112, 1118).

In some aspects, the new model updates may be sent only to the subset of users providing updates. That is, the updates may be differentially distributed. For example, at block 1110, the central server collects weight updates from User 1 and in turn computes a new model W1. At block 1112, the central server may push out or distribute W1 only to User 1. The update may be expressed as:

$$W_1 = W_0 + \eta\left(\frac{1}{n}\sum_{i} \Delta W_{k,i}\right) \qquad (18)$$

where the sum is over the user or users in the subset. At block 1114, the new model $W_1$ may be used for recognition and learning at the User 1 device.

At block 1108, the central server may receive a set of model updates from another user (e.g., from User 2) or subset of users and compute another new model update (1116). This model update may be applied to the ongoing model as:

$$W_2 = W_1 + \eta\left(\frac{1}{n}\sum_i \Delta W_{ki}\right) \quad (19)$$

even though the updates were computed on an older model, such as $W_0$. At block 1118, the new model $W_2$ may be distributed to the other user (e.g., User 2) or group of users. At block 1120, the new model $W_2$ may be used for recognition and learning at the User 2 device.

In some aspects, when model updates (e.g., $W_1$ or $W_2$) are received, they may be marked or otherwise configured with an indication as to which model they were based on. If updates are received after a threshold number of updates from the initial model (e.g., $W_0$), then such updates may be discarded as stale.

In the asynchronous update case, the asynchronous update times may be based on several factors. In one example, the updates may be planned at different times for different subsets of users to help load balance the server and network resources. In a second example, the updates may be sent after some device local metric is met, such as a targeted number of local model updates computed (e.g., a targeted number of pictures), or the sudden availability of a high-bandwidth channel from the device back to the central server.

In some aspects, learned weight updates may be applied locally in either an online manner of applying the updates after each learning computation (e.g., pictures), or using a mini-batch process of applying the updates after a targeted number of learning computations (e.g., pictures). For example, the users may send back a total accumulated weight update since the last received model from the central server. This approach may allow the users to improve their models locally and explore more of the model space faster at a risk of degraded intermediate performance because the inference is performed on a non-validated model.

The risk of performance degradation may be reduced by maintaining two models locally (e.g., one for reporting inference values and one for learning more of the model space). Of course, the number of models maintained is merely exemplary, and any number of models may be maintained according to resource availability. This may be done by maintaining the model W and the ongoing updates $\Delta W$, and using W for inference and $W + \eta\Delta W$ for model learning.

In these model exploration cases, the central server may apply the model updates as in methods described previously. In some aspects, the central server may test different updates against the validation set to determine which provides better model updates.

Transmitting Model Parameters

One challenge associated with distributed model learning is that the model sizes for high capacity models may be relatively large, so simple approaches of pushing out the models and getting back learned model parameters may consume a lot of bandwidth. Additionally, for the central servers, receiving model updates from a large number of devices (e.g., hundreds of millions to billions of devices) may produce a very large flow to maintain. There are several methods that may be employed to reduce the bandwidth and memory utilization at the devices.

From Devices to Central Server

The first approach is to subsample the $\Delta W$'s that each user (device) sends to the central server. If the model has a large number (e.g., millions or billions) of weight parameters then the $\Delta W$ vector has that many elements. Rather than have each of the millions or billions of devices sending a full weight vector to the central server, each user (device) may send a subset of elements (e.g., a random subset of elements). Because each $\Delta W$ element is typically computed to minimize an error function, each element update alone should be in a good direction. Because there are a large number of devices, bandwidth may not be efficiently utilized if all users send all of their updates, rather than using suitable statistical averaging. In one aspect, the server may send a parameter np for the number of parameters to send back when the model is pushed out to the user (device). The local user device may randomly select a corresponding number of element locations in the $\Delta W$ vector to send to the central server. As such, on each learning update, the local device may only compute the intermediate values used to compute the targeted $\Delta W$ elements. Further, the local user device may then only keep track of the np elements of $\Delta W$ over time. The device may send those np elements to the central server at an appropriate time.

During the next iteration, other options may be implemented. For example, in one configuration, the device may keep the same set of element locations or may regenerate new random element locations. Additionally, the value of parameter np pushed out by the central server may change over time, for example, to account for increasing number of devices, changing model sizes, increasing bandwidth, and other factors.

In another configuration, the central server may receive all or some of the parameters from the devices and may subsample the ΔW's used to update the model. This may be done to control the amount of computations performed in the central server for each update. In some aspects, the central server may also use random subsets of the ΔW's from all of the updates received. In other aspects, the central server may drop some of the updates received.

From Central Server to Devices

Distributing or pushing out the model updates to the devices may also consume a large amount of bandwidth. There are several approaches that may be implemented to reduce the bandwidth.

One approach is to broadcast or multi-cast the weight updates to the users because the model is common to all the users. For example, in one configuration, the weight updates may be distributed in overhead channels, such as cellular Short Message Service (SMS) channels, broadcast channels, or overhead locations.

Another approach is to compress the model weight updates using an algorithm based on the previous model weight values. For example, for model Wk+1, the central server may compute Wk+1 - Wk and then use a standard compression process on the resulting vector, which should have small values to send the model update. When a user (device) receives the update, the device may decompress it and add it to the previous model. Alternatively, Huffman compression may be used based on estimated probabilities of p(Wk+1| Wk).

Additionally, if there is correlation in the weight updates, such as may arise in a DNN using momentum, then the server may compute the double difference of weight updates:

$$(Wk+1 - Wk) - (Wk - Wk-1) \qquad (20)$$

The double difference may be compressed and sent for the model updates. In some aspect, compression based on the probability may be used p(Wk+1| Wk, Wk-1).

In yet another approach, the central server may indicate a given model layer or set of weights for user devices to focus on (e.g., update) for the current iteration. In this case, the server may indicate the set of weights being targeted for the current model update iteration. The devices may track weight updates only related to the targeted set of weights. Similar to above, the devices may further select random subsets of this targeted set of weights. The devices may send their model weight updates to the central server at the end of an iteration. The server may, in turn compute an updated model for this set of weights and send out only these updated weights for the next model update. In some aspects, iterations over time may target different weight sets for learning.

As an extension of the above approach, the central server may, in some aspects, direct different subsets of users to target different layers or subsets of weights for an iteration. The central server may also use the validation check phase to check which layer or model subset had the largest impact on the performance and push out only those updates.

Customized Classifier over Common Features

Aspects of the present disclosure are further directed to a customized classifier over common feature functions. Suppose that a user would like to identify mushrooms in the wild by their appearance, and the user is willing to pay for this ability. What is an efficient way for one or more mushroom experts to transfer their knowledge to the user and other mushroom hunters in such a way that these experts can be rewarded for their work? Besides mushrooms, other examples of classes of objects that can benefit from expert labeling include automobiles, animals, works of fine art, medical diagnostic images, etc.

In accordance with aspects of the present disclosure, a classifier, which leverages the power of machine learning, is disclosed. A set of entities (e.g., designated users or experts) may provide a corpora of labeled examples to a central server or "model store." This central server may also include a set of statistical features that are relevant to a particular sensory modality (or combination of modalities). These features may be learned in an unsupervised manner. The server may use both the learned features and the expert-provided set of labeled examples to compute a classifier. The server may distribute parameters of the computed classifier to devices that would allow users to compute the class of various objects that they encounter.

The memory consumed to store the parameters of the classifier will typically be many orders of magnitude smaller than a full training corpus. This client-server architecture may also allow the possibility of training a single classifier on the concatenation of two training corpora, endowing a user with the ability to merge classification knowledge from multiple experts in either distinct or overlapping domains.

Infrastructure may be provided, both on the server side and on the users' device side, to ensure that devices possess the appropriate set of features, the ability to store classifier parameters, and the ability to deploy these parameters to implement the correct classification. Accordingly, in an aspect of the present disclosure, a process for sharing the classification expertise of one or more designated users or experts among a potentially very large number of users is disclosed. One or more users may wish to use mobile devices to collect sensory data and, in some cases, classify these data into meaningful labels (e.g., view mushrooms with a camera in order to identify the mushroom type). The "expertise," which may be in the form of a labeled data corpora, may be supplied to one or more servers, which may combine the labeled data corpora with a set of previously learned features to compute a classifier over those features. The server may then distribute the classifier to devices of any interested users. There may be many more users than servers.

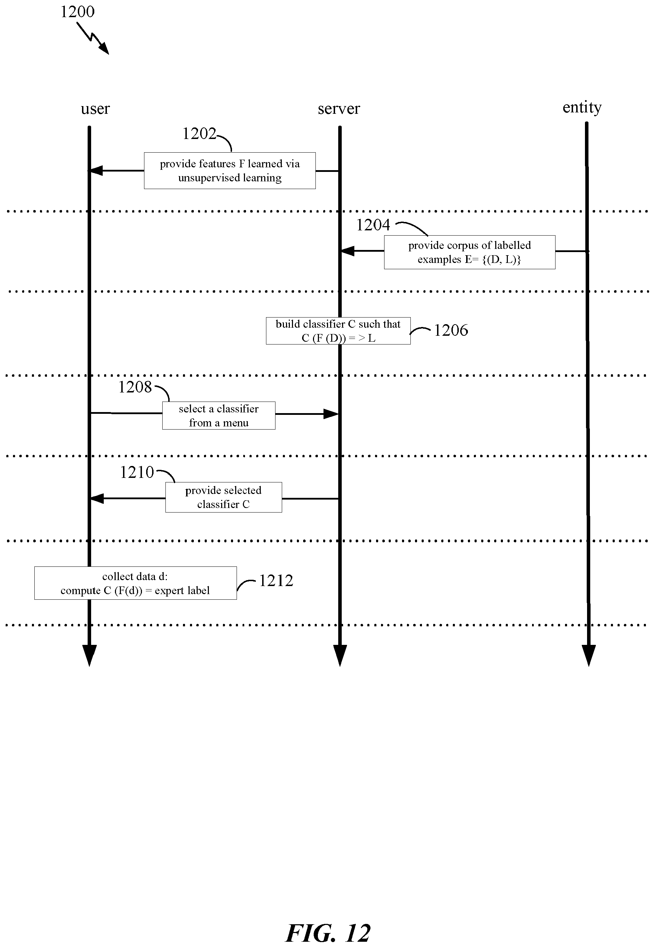

FIGURE 12 is a flowchart illustrating an exemplary data flow 1200 for generating a classifier in accordance with aspects of the present disclosure. Referring to FIGURE 12, at block 1102, a server may distribute a set of features F to one or more users.

In some aspects, the users may each have a mechanism for computing the same features from input data. One way to ensure that all users share the same input features would be for the server to push or distribute these features to all users, along with a version number. For example, an artificial neural network (ANN) with one or more layers may compute the features, and hence the server could perform this portion of the data flow by sending the connection weights of this ANN to all users. These features could also be learned collectively using distributed unsupervised learning.

An entity, expert or other designated user interested in providing classifiers to a set of users may provide labeled data to the server. This corpus of labeled data may remain available to the server so that it can retrain classifiers in the event that the input features have changed. At block 1204, for example, an expert may send a corpus of labeled examples, E including data D and labels L to the server. For instance, the corpus of labeled examples may be in the form of a set of images (and a set of unique labels for each image.

At block 1206, the server may build or learn a classifier that learns the mapping between each labeled datum Di and its corresponding expert-provided label Li in the corpus of examples E. There are many choices of possible classifiers and learning methods. For example, in one aspect, an ANN may be used for the classifier and training may be conducted using back-propagation.

In some aspects, a classifier that combines the knowledge contained in multiple experts' training sets (e.g., a classifier that can identify both mushrooms and butterflies in images) may also be constructed. This combined classifier may be constructed, for example, by performing the training using a mixture of the two training corpora.

In additional aspects, the classifier parameters may include architectural parameters (e.g., in the case of an ANN, the number of units in a layer). This may be useful if the complexity of a given corpus suggested or indicated uses a classifier with a higher capacity and hence more units in a given layer.

In one aspect, the training may involve training a classifier on top of the fixed features F(d), or it may involve fine-tuning the features, by for example, back propagating through the feature layers as well as the top classification layers. In another aspect, weight deltas from the fixed features F(d) and/or an updated F(d) may be sent out to the user devices. In another aspect, the training may include training two separate classifiers for the two expert training sets on top of the same shared features F(d).

In addition, the classifier may also be configured or organized in a hierarchical fashion such that the classifier has a top or general level as well as more specific classifiers. For example, a top-level classifier may classify an image as a car, while more specific classifiers may classify the type of car (e.g., sedan, sport utility vehicle, sport car, etc.). Multiple layers of the specific classifiers may also be provided. For example, one specific layer may classify an image as a 1958 Ferrari GT California Spyder.

In some aspects, the classifier may be applied to a data set and configured to perform a top-level classification. Based on the top-level classification, the classifier may request one or more additional classifiers from the server. Upon receipt of the one or more additional classifiers, more specific classifications with respect to the data set may be performed.

At block 1208, a user may select a body of knowledge or classifier from a central set of choices via the server (e.g., "model store"). The user may indicate to the server a selection for which classifier it would like to download. This may, for example, take the form of an online store that displays all classifiers available for download. This store may, in addition to the classifier, give users an option to download low-level features to compute the classifier (e.g., in the case of a mushroom classifier, the user may first download a set of low-level visual features for natural images). The user may also specify multiple classifiers to be downloaded as a combined classifier.

Further, a user may specify a layer in the hierarchy of classifiers that is desired. For example, a user may want a general classifier to classify fruit, such as an apple, or a more specific classifier, which may further distinguish between types of apples (e.g., Granny Smith, Pink Lady, Fuji, Gala, etc.)

At block 1210, the server may provide the user with the requested knowledge in the form of the parameters that describe the classifier C. Once the user has specified one or more classifiers to build and/or download, the server may distribute or push the parameters of this classifier to the user's device. In the case of an ANN-based classifier, these parameters may, for example, comprise connection weights and bias terms.

In some instances, the server may automatically push the parameters of a certain classifier or a layer of the hierarchy of classifiers to the user. This may, for example, be based on sensory information provided via the user (e.g., the user has numerous images of sport cars - a more specific classifier may be provided to enable the user to further classify the capture sports car images).

At block 1212, the user may collect data d (e.g., take a picture of a mushroom with her smartphone). The features for d, F(d) may be computed locally using a previously provided set of features F, for example. The classifier C may be applied to these features to compute an estimated expert's label for an unknown stimulus (e.g., the type of the mushroom).

Once armed with a set of features F and a downloaded classifier C, a user may collect a data set d (e.g., an image of a mushroom), extract its features F(d), and feed these to the classifier to obtain a classification C(F(d)). The output of the classifier on these features may represent an expert's opinion of the class of this observation that is consistent with the labeled corpus E that the expert previously provided. In accordance with aspects of the present disclosure, many classifiers (e.g., relatively shallow ANNs) may be computed relatively quickly. This means that classification may take place immediately upon acquiring the data and may be presented to the user immediately as part of the data acquisition process. For example, a user's smartphone camera viewfinder may display the estimated type of the mushroom on top of the image itself in real time.

Alternatively, if the classifier is complex, classification of the user's data d may be performed back on the server by first computing the features F(d) on the device and sending those features to the server. The server may then compute a classification C(F(d)) and send the result back to the user's device.

User Feedback

When users are able to classify data on their device, they may optionally wish to provide feedback related to the system. Such feedback may, for example, take the form of

Type 1: A new label, if the user believes the classifier has generated an incorrect label for a given input and knows what the correct label should be;

Type 2: A "wrong label" message, if the user believes the classifier has generated an incorrect label for a given input but does not know what the correct label should be; or

Type 3: A request to load a different classifier, if, based on the initial results of the classifier, the user would like to apply a more specialized classifier on the same data.

The feedback may be provided to the user's device, the server, an expert or designated user, or group of user or other entity. In some aspects, Type 1 feedback may be used to build a private classifier. For example, the private classifier may be derived from an expert-provided classifier where the user can provide additional labelled examples. Type 2 feedback may be used in isolation, or, preferably, in combination with feedback from other users to re-train the classifier by providing negative labelled examples.

Type 3 feedback could be used to build a database of associations between object classes to other classifiers. For example, someone using a classifier for broad object classification might image an apple, receive the label "Apple," and then switch to a more specific classifier for apples in order to determine the specific variety of apple. This action may be captured in the form of feedback so that other classifiers that supply the label "apple" could also automatically provide users the option to switch to the same specific apple classifier. By accumulating such Type 3 feedback, a system may order or organize multiple classifiers into a hierarchy of classifiers and offer automatic switching to more specific classifiers in a context-dependent manner. The decision to switch from one classifier to a more specific classifier could be automated and based on, for example, how long the user dwells on a certain object, or how many instances of a class are present in a single image (if there are many "apples" in an image, e.g., a more specific classifier of apples may be useful).

Model Store

A front-end clearing place for these classifiers and expert models may be a model store. The model store may allow certain users (e.g., experts) to upload their labeled data sets and set a price for classifiers built using their data sets. The model store may also allow users to purchase models with the backend process described above for training the models and reusing the efficiency of shared features.

Pricing in the model store may allow for one-off pricing for each expert labeled data set, or may allow for combination pricing. An example of combination pricing may include a higher price for the first classifier on a given feature set and reduced price on subsequent classifiers built with the same feature set. Alternatively, combination pricing can include a given price on the first mushroom classifier and discounted pricing for subsequent mushroom classifiers from other experts.

The backend may compute some joint performance scores for the incremental improvement of adding the additional expert labeled data to help determine the incremental price. The model store may also display metrics to help the user select which expert data sets to purchase, such as classification accuracies, number of labeled images, etc.

The model store may also allow the user to upload features F(d), for example, from a few images of mushrooms acquired on their phone to evaluate which mushroom classifier is best suited to their data. The model that achieves the highest classification accuracy on the sample images from the user would be the one to purchase.

Other Exemplary Use Cases

In some aspects, a user may purchase a specific classifier from an "app store" or other application sales outlet that works in combination with a common set of features.

In one aspect, a coarse classifier of fruits and vegetables may identify an object being sensed by a user's device as an apple. Further, by dwelling or hovering over the object, the classifier may load a more specific classifier of apples (e.g., trained against the same common feature functions) to tell the user that they are looking at a Granny Smith apple. In some aspects, the classifier may identify one or more other classifiers that may further classify an object.

In another aspect, a user who knows a lot about trains can buy an expert's train classifier and augment it with their own knowledge.

In still another aspect, a user traveling to Davos wearing Google Glass may create a customized classifier that merges two expert classifiers - famous people's faces and cheeses - into one combined labeler for the heads-up display.

In yet still another aspect, a swarm of robots equipped with cameras or other sensors in a hazardous location may use their cameras (or other sensors) and unsupervised learning to discover good visual features for representing the textures in their environment (gravel, grass, mud, rubble). In addition, using accelerometers and odometers, a few scout robots may assign labels of "passable" and "impassable" to different textures based on whether the robot can make forward progress over this kind of terrain. The robots may also learn a custom classifier over these features. The custom classifiers may then be shared with the rest of the swarm.

Although aspects of the present disclosure have described spiking neurons and spiking neuron models, this is merely exemplary and non-spiking neurons and neuron models may also be used. Moreover, the concepts and techniques disclosed herein may be used for both spiking and non-spiking distributed learning.

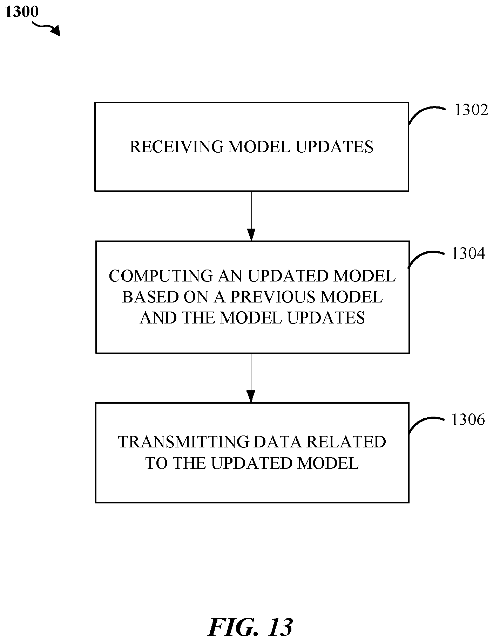

FIGURE 13 illustrates a method 1300 for learning a model in accordance with aspects of the present disclosure. In block 1302, the process receives one or more model updates from one or more users. In block 1304, the process computes an updated model based on a previous model and the model updates. Furthermore, in block 1306, the process transmits data related to a subset of the updated model to one or more users based on the updated model.

In some aspects, the updated model may be validated based on performance metrics and/or model capacity.

In some aspects, the updated model may be computed based on detecting outliers based on a comparative analysis of the model updates.

In some aspects, the updated model may include a change in model architecture and/or learning rate. The architecture and/or learning rate are determined based on the model performance against validation data and/or sparsity of weight updates.

In some aspects, the subset may include only newly trained layers of the models. In some aspects, the subset may comprise a random subset of the models.

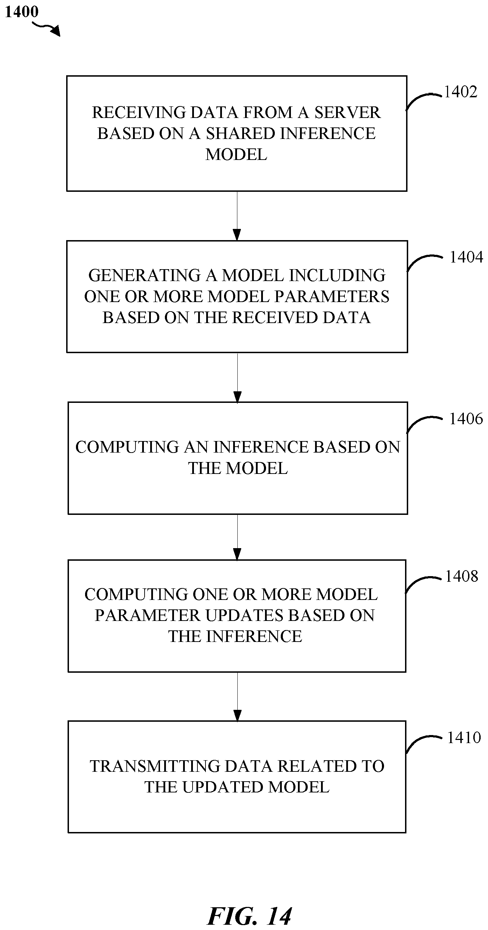

FIGURE 14 illustrates a method 1400 for learning a model in accordance with aspects of the present disclosure. In block 1402, the process receives data from a server based on a shared inference model. In block 1404, the process generates a model including one or more model parameters based on the received data. In block 1406, the process computes an inference based on the model. In block 1408, the process computes one or more model parameter updates based on the inference. Furthermore, in block 1410, the process transmits data based on the model parameter update(s) to the server.

In some aspects, the process further includes training a classifier using locally cached training examples.

In some aspects, the data may be transmitted based on a difference between the current model update and the previous model update. For example, the difference can be compressed or used in a momentum model.

In some aspects, computing a model parameter update(s) and/or transmitting data based on the model parameter update(s) includes selecting a random subset of model parameters to compute and/or send.

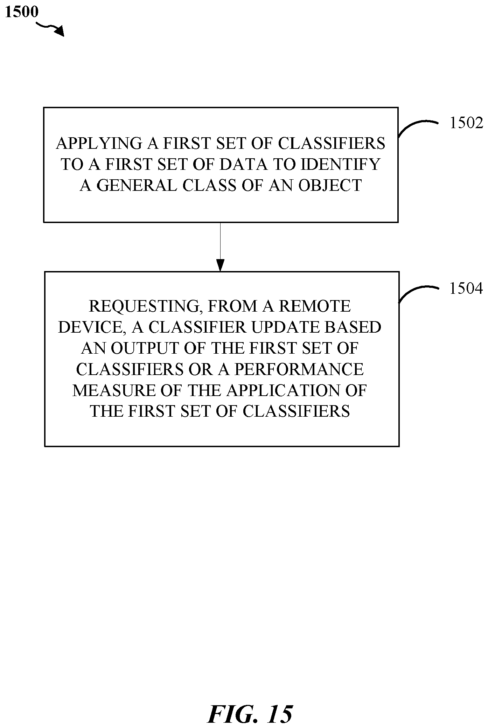

FIGURE 15 illustrates a method 1500 for updating a set of classifiers in accordance with aspects of the present disclosure. In block 1502, the process applies a first set of classifiers to a first set of data. The data may comprise sensor data or other data stored on the user device. Furthermore, in block 1504, the process requests, from a remote device, a classifier update based on an output of the first set of classifiers and/or a performance measure of the application of the first set of classifiers.

In some aspects, the request may be based on context information. The context information may, for example, include user input information, a number of observations for a given time period (e.g., a day, week, month, etc.), a location, activity, accelerometers, remaining battery life (e.g., if the battery life is low, a low complexity classifier may be indicated). In additional aspects, the request may be based on computational load. For example, where computational load is high (e.g., above a predetermined threshold), a lower complexity classifier may be indicated. On the other hand, where computational load is low (e.g., below a predetermined threshold), a more complex classifier may be used.

In some aspects, the performance measure may comprise the accuracy or confidence of the classifiers, an indication of agreement of multiple classifiers, a speed of computation of the classifiers and/or the like.

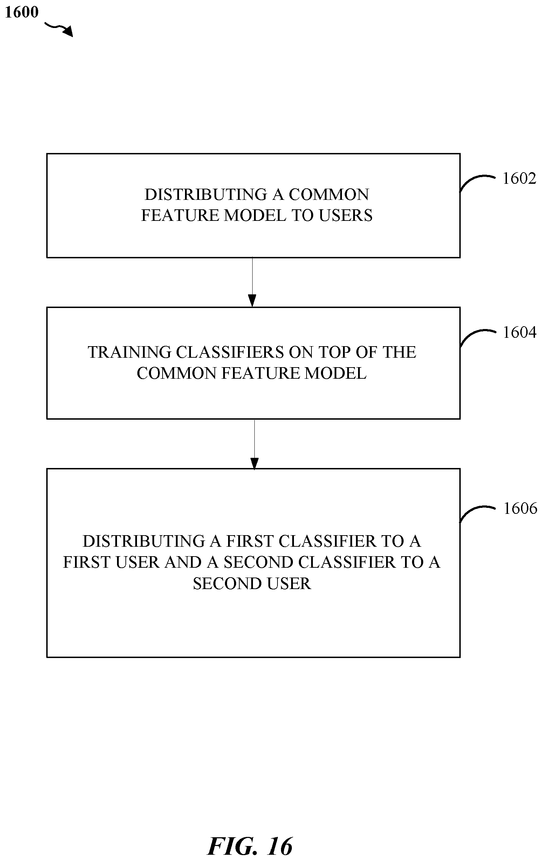

FIGURE 16 illustrates a method 1600 for generating a classifier model in accordance with aspects of the present disclosure. In block 1602, the process distributes a common feature model to users. In block 1604, the process trains classifiers on top of the common feature model. Furthermore, in block 1606, the process distributes a first classifier to a first user and a second classifier to a second user.

In some aspects, one or more of the classifiers may be trained on a set of labeled data obtained from an entity. An entity may comprise a user, certain designated user or other entities. A metric may be provided for each of the classifiers trained on the set of labeled data obtained from an entity. The metric may, for example, include information regarding classification accuracy or a number of labeled images.

In some aspects, the process receives one or more features computed from data on a remote device. In addition, the process determines one or classifiers for classifying the data on the remote device based on the one or more features. In turn, the process distributes an indication of the one or more classifiers to the remote device.

In some aspects, the process receives a feature computed from data on a remote device. The process also computes a classification based on the received feature. Further, the process transmits the classification to the remote device.

In some aspects, the process combines the first classifier and the second classifier to generate a combined classifier. The combine classifier may be configured to make classifications for classes associated with one or more sets of labeled data. The process also distributes the combined classifier to one or more of the users.

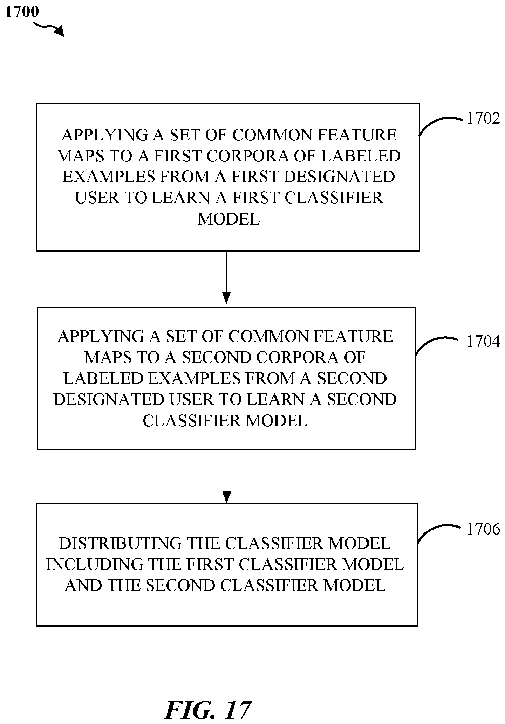

FIGURE 17 illustrates a method 1700 for generating a classifier model in accordance with aspects of the present disclosure. In block 1702, the process applies a set of common feature maps to a first corpora of labeled examples from a first designated user to learn a first classifier model. In block 1704, the process applies the set of common feature maps to a second corpora of labeled examples from a second designated user to learn a second classifier model. Furthermore, in block 1706, the process distributes the classifier model including the first classifier model and the second classifier model to one or more users.

In some aspects, a combined classifier may be generated. The combined classifier may be generated based on the corpora of labeled examples, the additional corpora of labeled examples and using the first set of common feature functions and the second set of common feature functions. As such, the combined classifier may be configured to make classifications for classes associated with the one or more corpora of labeled examples and the additional corpora.

The various operations of methods described above may be performed by any suitable means capable of performing the corresponding functions. The means may include various hardware and/or software component(s) and/or module(s), including, but not limited to, a circuit, an application specific integrated circuit (ASIC), or processor. Generally, where there are operations illustrated in the figures, those operations may have corresponding counterpart means-plus-function components with similar numbering.

As used herein, the term "determining" encompasses a wide variety of actions. For example, "determining" may include calculating, computing, processing, deriving, investigating, looking up (e.g., looking up in a table, a database or another data structure), ascertaining and the like. Additionally, "determining" may include receiving (e.g., receiving information), accessing (e.g., accessing data in a memory) and the like. Furthermore, "determining" may include resolving, selecting, choosing, establishing and the like.

As used herein, a phrase referring to "at least one of" a list of items refers to any combination of those items, including single members. As an example, "at least one of a, b, or c" is intended to cover: a, b, c, a-b, a-c, b-c, and a-b-c.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general-purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, erasable programmable read-only memory (EPROM), electrically erasable programmable read-only memory (EEPROM), registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware, or any combination thereof. If implemented in hardware, an example hardware configuration may comprise a processing system in a device. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement signal processing functions. For certain aspects, a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further.

The processor may be responsible for managing the bus and general processing, including the execution of software stored on the machine-readable media. The processor may be implemented with one or more general-purpose and/or special-purpose processors. Examples include microprocessors, microcontrollers, DSP processors, and other circuitry that can execute software. Software shall be construed broadly to mean instructions, data, or any combination thereof, whether referred to as software, firmware, middleware, microcode, hardware description language, or otherwise. Machine-readable media may include, by way of example, random access memory (RAM), flash memory, read only memory (ROM), programmable read-only memory (PROM), erasable programmable read-only memory (EPROM), electrically erasable programmable Read-only memory (EEPROM), registers, magnetic disks, optical disks, hard drives, or any other suitable storage medium, or any combination thereof. The machine-readable media may be embodied in a computer-program product. The computer-program product may comprise packaging materials.

In a hardware implementation, the machine-readable media may be part of the processing system separate from the processor. However, as those skilled in the art will readily appreciate, the machine-readable media, or any portion thereof, may be external to the processing system. By way of example, the machine-readable media may include a transmission line, a carrier wave modulated by data, and/or a computer product separate from the device, all which may be accessed by the processor through the bus interface. Alternatively, or in addition, the machine-readable media, or any portion thereof, may be integrated into the processor, such as the case may be with cache and/or general register files. Although the various components discussed may be described as having a specific location, such as a local component, they may also be configured in various ways, such as certain components being configured as part of a distributed computing system.

The processing system may be configured as a general-purpose processing system with one or more microprocessors providing the processor functionality and external memory providing at least a portion of the machine-readable media, all linked together with other supporting circuitry through an external bus architecture. Alternatively, the processing system may comprise one or more neuromorphic processors for implementing the neuron models and models of neural systems described herein. As another alternative, the processing system may be implemented with an application specific integrated circuit (ASIC) with the processor, the bus interface, the user interface, supporting circuitry, and at least a portion of the machine-readable media integrated into a single chip, or with one or more field programmable gate arrays

(FPGAs), programmable logic devices (PLDs), controllers, state machines, gated logic, discrete hardware components, or any other suitable circuitry, or any combination of circuits that can perform the various functionality described throughout this disclosure. Those skilled in the art will recognize how best to implement the described functionality for the processing system depending on the particular application and the overall design constraints imposed on the overall system.

The machine-readable media may comprise a number of software modules. The software modules include instructions that, when executed by the processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

If implemented in software, the functions may be stored or transmitted over as one or more instructions or code on a computer-readable medium. Computer-readable media include both computer storage media and communication media including any medium that facilitates transfer of a computer program from one place to another. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. In addition,, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray® disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer- readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein. For certain aspects, the computer program product may include packaging material.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

## Claims

**1.** A method of updating a model for providing classification of data on mobile devices comprising, by a server:

training (902, 1102) an initial model (WO) on a central dataset;
distributing (904, 906, 1104, 1106, 1602) the initial model to a first remote device (802) to apply to a first set of data;
distributing (904, 908, 1104, 1108, 1602) the initial model to a second remote device (802) to apply to a second set of data; **characterized by**:

collecting (910, 1110, 1116, 1302), from the first and second remote devices, model weight updates (∆WO_1, ∆WO_2) based at least in part on at least one of an output of the initial model or a performance measure of the application of the initial model;
computing (912, 914, 1110, 1116, 1304, 1604) an updated model (W1, W2) based on the model weight updates, to provide an updated model; and
distributing (916, 1112, 1118, 1306, 1606) the updated model to the remote devices.

**2.** The method of claim 1, in which the requesting is based at least in part on context information.

**3.** The method of claim 1, in which the performance measure comprises an accuracy of classifiers of the initial model, a level of agreement of multiple classifiers, or a speed of computation of the classifiers.

**4.** The method of claim 1, in which a first classifier of the initial model and the classifier update are built on a same feature generator.

**5.** The method of claim 1, in which a first classifier of the initial model and the classifier updates are configured as a hierarchical classifier in which the first classifier comprises a general classifier and the classifier updates comprises specific classifiers.

**6.** The method of claim 5, further comprising applying the specific classifier to an object to identify a specific class of the object.

**7.** The method of claim 1, in which the remote devices are configured to apply a first classifier of the initial model.

**8.** The method of claim 7, further comprising:
computing features and transmitting the computed features to the remote device, the remote device applying the first classifier to the computed features to compute a classification.

**9.** An apparatus for updating a set of classifiers comprising:
means to perform the method of any of claims 1 to 8.

**10.** A computer program product comprising a non-transitory computer-readable medium, the non-transitory computer-readable medium comprising instructions which, when executed by a computer, cause the computer to carry out the method of any of claims 1 to 8.

## Patentansprüche

**1.** Verfahren zum Aktualisieren eines Modells zur Bereitstellung einer Klassifizierung von Daten auf mobilen Vorrichtungen, aufweisend, durch einen Server:

Trainieren (902, 1102) eines Ausgangsmodells (WO) auf einem zentralen Datensatz;
Verteilen (904, 906, 1104, 1106, 1602) des Ausgangsmodells an ein erstes entferntes Gerät (802) zur Anwendung auf einen ersten Datensatz;
Verteilen (904, 908, 1104, 1108, 1602) des anfänglichen Modells an eine zweite entfernte Vorrichtung (802), um es auf einen zweiten Datensatz anzuwenden; **gekennzeichnet durch**:

Sammeln (910, 1110, 1116, 1302) von der ersten und der zweiten Fernbedienungsvorrichtung von Modellgewichtungsaktualisierungen ($\Delta$WO_1, $\Delta$WO_2), die zumindest teilweise auf mindestens einer Ausgabe des Ausgangsmodells oder einem Leistungsmaß der Anwendung des Ausgangsmodells basieren;
Berechnen (912, 914, 1110, 1116, 1304, 1604) eines aktualisierten Modells (W1, W2) auf der Grundlage der Modellgewichtungsaktualisierungen, um ein aktualisiertes Modell bereitzustellen; und
Verteilen (916, 1112, 1118, 1306, 1606) des aktualisierten Modells an die Remotestationen.

**2.** Verfahren nach Anspruch 1, bei dem das Anfordern zumindest teilweise auf Kontextinformationen basiert.

**3.** Verfahren nach Anspruch 1, bei dem das Leistungsmaß eine Genauigkeit von Klassifikatoren des Ausgangsmodells, einen Grad der Übereinstimmung mehrerer Klassifikatoren oder eine Berechnungsgeschwindigkeit der Klassifikatoren aufweist.

**4.** Verfahren nach Anspruch 1, bei dem ein erster Klassifikator des Ausgangsmodells und die Klassifikatoraktualisierung auf demselben Merkmalsgenerator aufgebaut sind.

**5.** Verfahren nach Anspruch 1, bei dem ein erster Klassifikator des Ausgangsmodells und die Klassifikatoraktualisierungen als hierarchischer Klassifikator konfiguriert sind, bei dem der erste Klassifikator einen allgemeinen Klassifikator und die Klassifikatoraktualisierungen spezifische Klassifikatoren aufweisen.

**6.** Verfahren nach Anspruch 5 weist ferner die Anwendung des spezifischen Klassifikators auf ein Objekt auf, um eine spezifische Klasse des Objekts zu identifizieren.

**7.** Verfahren nach Anspruch 1, bei dem die entfernten Geräte so konfiguriert sind, dass sie einen ersten Klassifikator des Ausgangsmodells anwenden.

**8.** Verfahren nach Anspruch 7, das ferner Folgendes aufweist:
Berechnen von Merkmalen und Übertragen der berechneten Merkmale an die entfernte Vorrichtung, wobei die entfernte Vorrichtung den ersten Klassifikator auf die berechneten Merkmale anwendet, um eine Klassifizierung zu berechnen.

9. Vorrichtung zum Aktualisieren eines Satzes von Klassifikatoren, aufweisend:
Mittel zur Durchführung des Verfahrens nach einem der Ansprüche 1 bis 8.

10. Computerprogrammprodukt, das ein nicht-übertragbares, computerlesbares Medium aufweist, wobei das nicht-übertragbare, computerlesbare Medium Anweisungen aufweist, die, wenn sie von einem Computer ausgeführt werden, den Computer veranlassen, das Verfahren nach einem der Ansprüche 1 bis 8 auszuführen.

## Revendications

1. Procédé de mise à jour d'un modèle permettant une classification de données sur des dispositifs mobiles, le procédé comprenant les étapes consistant, par un serveur, à :

    former (902, 1102) un modèle initial (WO) sur un ensemble de données central ;
    distribuer (904, 906, 1104, 1106, 1602) le modèle initial à un premier dispositif distant (802) afin d'appliquer un premier ensemble de données ;
    distribuer (904, 908, 1104, 1108, 1602) le modèle initial à un second dispositif distant (802) afin d'appliquer un second ensemble de données ;
    le procédé étant **caractérisé par** les étapes consistant à :

        collecter (910, 1110, 1116, 1302), auprès des premier et second dispositifs distants, des mises à jour de poids de modèle (ΔWO_1, ΔWO_2) sur la base, au moins en partie, d'une sortie du modèle initial et/ou d'une mesure de performance de l'application du modèle initial ;
        calculer (912, 914, 1110, 1116, 1304, 1604) un modèle mis à jour (W1, W2) sur la base des mises à jour de poids de modèle, afin de fournir un modèle mis à jour ; et
        distribuer (916, 1112, 1118, 1306, 1606) le modèle mis à jour aux dispositifs distants.

2. Procédé selon la revendication 1, dans lequel la demande est basée, au moins en partie, sur des informations contextuelles.

3. Procédé selon la revendication 1, dans lequel la mesure de performance comprend une précision de classificateurs du modèle initial, un niveau d'accord de multiples classificateurs ou une vitesse de calcul des classificateurs.

4. Procédé selon la revendication 1, dans lequel un premier classificateur du modèle initial et la mise à jour de classificateur sont construits sur un même générateur de caractéristiques.

5. Procédé selon la revendication 1, dans lequel un premier classificateur du modèle initial et les mises à jour de classificateur sont configurés comme un classificateur hiérarchique où le premier classificateur comprend un classificateur général et les mises à jour de classificateur comprennent des classificateurs spécifiques.

6. Procédé selon la revendication 5, comprenant en outre l'étape consistant à appliquer le classificateur spécifique à un objet afin d'identifier une classe spécifique de l'objet.

7. Procédé selon la revendication 1, dans lequel les dispositifs distants sont configurés pour appliquer un premier classificateur du modèle initial.

8. Procédé selon la revendication 7, comprenant en outre les étapes consistant à :
calculer des caractéristiques et transmettre les caractéristiques calculées au dispositif distant, le dispositif distant appliquant le premier classificateur aux caractéristiques calculées afin de calculer une classification.

9. Appareil de mise à jour d'un ensemble de classificateurs, l'appareil comprenant :
un moyen permettant de réaliser le procédé selon l'une quelconque des revendications 1 à 8.

10. Produit-programme informatique comprenant un support non transitoire lisible par ordinateur, le support non transitoire lisible par ordinateur comprenant des instructions qui, lorsqu'elles sont exécutées par un ordinateur, amènent l'ordinateur à mettre en oeuvre le procédé selon l'une quelconque des revendications 1 à 8.

100
102
104
106
$108_1$
$X_1^i$
$108_2$
$X_2^i$
$108_N$
$X_N^i$
NEURONS
LEVEL i
NETWORK OF
SYNAPSES
$\omega_1^{(i, i+1)}$
$\omega_P^{(i, i+1)}$
NEURONS
LEVEL (i + 1)
$110_1$
$Y_1^{i+1}$
$110_2$
$Y_2^{i+1}$
$110_M$
$Y_M^{i+1}$

*FIG. 1*

200
208
y
202
$206_1$
$W_1$
$206_i$
$W_i$
$206_N$
$W_N$
$X_1$
$204_1$
$X_i$
$204_i$
$X_N$
$204_N$


*FIG. 2*

300
Δw(t)
LTP
302
306
t=tpost-tpre
LTD
304

*FIG. 3*

400

Negative Regime
402
Positive Regime
404
u
v-
v+
vs
(LIF)
(ALIF)
Neuron will fire, it is only a matter of time (assuming excitatory input dominant)
v

*FIG. 4*

500
504
Weights/System parameters
502
General Purpose Processor
506
Program Memory

FIG. 5

600
604
606
602
Neuron Parameters/ System parameters
Interconnection Network
Processing Unit1
606
Processing UnitN

FIG. 6

700
702
Weights/ System parameters
704
Processing Unit1
702
Weights/ System parameters
704
Processing UnitN

*FIG. 7*

800
816
Routing Connection Processing
802
Local Processing Unit i
804
Local State Memory
806
Local Parameter Memory
808
Local Model Program
810
Local Learning Program
812
Local Connection Memory
802
804
Local State Memory
806
Local Parameter Memory
808
Local Model Program
810
Local Learning Program
812
Local Connection Memory
Local Processing Unit j
814
Configuration Processing

*FIG. 8*

900
Central Server
User 1
User 2
902
Train initial model W0 on central dataset
904
Push out W0 to users
906
Use W0 for recognition and learn weight updates, ΔW0_1, on pictures from user 1
908
Use W0 for recognition and learn weight updates, ΔW0_2, on pictures from user 2
910
Collect update weights ΔW0_i from users
912
Compute updated model W1
914
optionally validate model W1
916
Push out W1 to users
918
Use W1 for recognition and learn weight updates, ΔW1_1, on pictures from user 1
920
Use W1 for recognition and learn weight updates, ΔW1_2, on pictures from user 2

*FIG. 9*

1000

Inference Results
1008
Centrally Learned Inference Engine
1006
Distributedly Learned Features
1004
Input Data
1002

*FIG. 10*

1100


Central Server
User 1
User 2
1102
Train initial model W 0 on central dataset
1104
Push out W0 to users
1106
Use W0 for recognition and learn weight updates , DW0_1, on pictures from user 1
1108
Use W0 for recognition and learn weight updates , DW0_2, on pictures from user 2
1110
Collect update weights DW0_1 from user 1, compute and optionally validate model W 1
1112
Push out W1 to user 1
1114
Use W1 for recognition and learn weight updates , DW1_1, on pictures from user 1
1116
Collect update weights DW0_2 from user 2, compute and optionally validate model W 2
1118
Push out W2 to user 2
1120
Use W2 for recognition and learn weight updates , DW2_2, on pictures from user 2


*FIG. 11*

1200

user
server
entity
1202
provide features F learned via unsupervised learning
1204
provide corpus of labelled examples E= {(D, L)}
build classifier C such that C (F (D)) = > L
1206
1208
select a classifier from a menu
1210
provide selected classifier C
collect data d:
compute C (F(d)) = expert label
1212

*FIG. 12*

1300

RECEIVING MODEL UPDATES
1302
COMPUTING AN UPDATED MODEL BASED ON A PREVIOUS MODEL AND THE MODEL UPDATES
1304
TRANSMITTING DATA RELATED TO THE UPDATED MODEL
1306

*FIG. 13*

1400
RECEIVING DATA FROM A SERVER BASED ON A SHARED INFERENCE MODEL
1402
GENERATING A MODEL INCLUDING ONE OR MORE MODEL PARAMETERS BASED ON THE RECEIVED DATA
1404
COMPUTING AN INFERENCE BASED ON THE MODEL
1406
COMPUTING ONE OR MORE MODEL PARAMETER UPDATES BASED ON THE INFERENCE
1408
TRANSMITTING DATA RELATED TO THE UPDATED MODEL
1410

*FIG. 14*

1500

APPLYING A FIRST SET OF CLASSIFIERS TO A FIRST SET OF DATA TO IDENTIFY A GENERAL CLASS OF AN OBJECT

1502

REQUESTING, FROM A REMOTE DEVICE, A CLASSIFIER UPDATE BASED AN OUTPUT OF THE FIRST SET OF CLASSIFIERS OR A PERFORMANCE MEASURE OF THE APPLICATION OF THE FIRST SET OF CLASSIFIERS

1504

*FIG. 15*

1600
DISTRIBUTING A COMMON FEATURE MODEL TO USERS
1602
TRAINING CLASSIFIERS ON TOP OF THE COMMON FEATURE MODEL
1604
DISTRIBUTING A FIRST CLASSIFIER TO A FIRST USER AND A SECOND CLASSIFIER TO A SECOND USER
1606

*FIG. 16*

1700
APPLYING A SET OF COMMON FEATURE MAPS TO A FIRST CORPORA OF LABELED EXAMPLES FROM A FIRST DESIGNATED USER TO LEARN A FIRST CLASSIFIER MODEL
1702
APPLYING A SET OF COMMON FEATURE MAPS TO A SECOND CORPORA OF LABELED EXAMPLES FROM A SECOND DESIGNATED USER TO LEARN A SECOND CLASSIFIER MODEL
1704
DISTRIBUTING THE CLASSIFIER MODEL INCLUDING THE FIRST CLASSIFIER MODEL AND THE SECOND CLASSIFIER MODEL
1706

*FIG. 17*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **EMILIANO MILUZZO et al.** Darwin phones: the evolution of sensing and inference on mobile phones. *PROCEEDINGS OF THE 8TH INTERNATIONAL CONFERENCE ON MOBILE SYSTEMS, APPLICATIONS, AND SERVICES, MOBISYS,* 15 June 2010, ISBN 978-1 -60-558985-5
- **JEFFERY DEAN et al.** Large scale distributed deep networks. *26th annual conference on Neural Information Processing Systems,* 06 December 2012, http://books.nips.cc/papers/files/nips25/NIPS2012_0598.pdf